# EUROPEAN PATENT SPECIFICATION

(11) **EP 2 690 485 B1**
(45) Date of publication and mention of the grant of the patent: **14.09.2016**
(21) Application number: 13176423.5
(22) Date of filing: 15.07.2013
(51) Int. Cl.: G02B 27/10, G02B 27/28, G03B 35/10, H04N 13/02, G02B 5/30

(54) **Polarization device, and imaging apparatus using the same**
Polarisierungsvorrichtung und dessen Benutzung in einer Bilderzeugungsvorrichtung
Dispositif de polarisation et appareil d'imagerie l'utilisant

(30) Priority: 23.07.2012 JP 2012162345; 09.05.2013 JP 2013099390
(43) Date of publication of application: 29.01.2014
(73) Proprietor: Ricoh Company, Ltd., Tokyo 143-8555 (JP)
(72) Inventor: Hirai, Hideaki, Japan 143-8555 (JP)
(74) Representative: Schwabe - Sandmair - Marx

(56) References cited:
- EP-A1- 0 715 198
- EP-A1- 2 447 685
- EP-A2- 2 464 128
- WO-A2-2012/002661
- DE-A1-102011 117 569
- JP-A- 2012 133 311
- US-A1- 2008 068 451

## Description

### FIELD OF THE INVENTION

The present invention relates to a polarization device to perform polarization on an incident light beam so that the incident light beam is separated into light beams having different polarization components, and to an imaging apparatus using the polarization device.

### BACKGROUND OF THE INVENTION

Conventional optical devices used for projectors are typically equipped with a cross prism to perform color synthesis (color composition) or color separation of light. Such a cross prism is formed of a combination of four triangle-pole prisms. Specifically, four triangle-pole prisms are arranged such that the tops of the prisms are contacted with (face) each other, and the prisms are fixedly adhered to each other with an adhesive. In this regard, a wavelength selection film is provided on each of the bonded surfaces of the prisms. When the cross prism receives light beams having different wavelengths, the cross prism outputs light beams having the two light beams in different directions.

JP-2000-227765-A proposes a projector using such a cross prism, which separates a light beam incident thereon from a light source into three color light beams (i.e., red (R), green (G) and blue (B) light beams) by reflecting a part of the incident light beam while transmitting another part of the incident light beam. The projector modulates each of the thus separated color light beams with an image signal to project an image on a screen by synthesizing the modulated R, G and B color light beams.

The cross prism of the above-mentioned projector uses a wavelength selection film including a multilayer film of dielectric materials. On the other hand, there is an optical device called as a polarization beam splitter, which divides a light beam into two or more light components. Such a beam splitter reflects a part of the light beam while transmitting another part of the light beam depending on the polarization components of the light beam. When the incident angle at the interface in the multilayer film is adjusted to satisfy the Brewster's angle, the reflectivity of a S polarization component is increased, and a P polarization component is not reflected (i.e., antireflection of a P polarization component can be realized). Since this beam splitter is limited to the configuration of S polarization component reflection/P polarization component transmission, it is difficult to constitute a polarization selection type cross prism using such a multilayer film as used for general wavelength selection type cross prisms. Therefore, even when a polarization beam splitter having a multilayer film structure is used for the above-mentioned cross prism, which can perform synthesis of color light beams or separation of a light beam into color light beams, it is impossible to separate an incident light beam into two polarization components having polarization directions which are perpendicular to each other, or to synthesize (combine) two polarization components having polarization directions which are perpendicular to each other.

WO 2012/002661 A2 discloses a three-dimensional camera module having an X-prism and a pair of polarizers.

EP 0 715 198 A1 discloses a stereoscopic microscope having an X-prism as well as triangular prisms and polarizing components.

JP 2012-133311 discloses a stereoscopic photographing device comprising a quadrangle-pole prism.

EP 2 447 685 A1 discloses a spectral image acquiring apparatus including a wire-grating polarizer.

EP 2 464 128 A2 discloses a stereoscopic image shooting apparatus including a bifurcated cross-shaped beam splitter.

The invention is defined by the appended claims.

Aspects, features and advantages will become apparent upon consideration of the following description of the preferred embodiments taken in conjunction with the accompanying drawings.

### BRIEF DESCRIPTION OF THE SEVERAL VIEWS OF THE DRAWINGS

FIGS. 1A and 1B are a schematic plan view and a schematic perspective view illustrating the construction of a polarization device according to an example;
FIGS. 2A and 2B are a schematic plan view and a schematic perspective view illustrating the construction of another polarization device;
FIG. 3 illustrates light paths of light incident on the polarization device illustrated in FIG. 2;
FIG. 4 is a schematic perspective view illustrating a cross prism for use in the polarization device;
FIGS. 5 and 6 illustrate light paths of light incident on the cross prism illustrated in FIG. 5;
FIG. 7 is a photograph showing a polarizer layer having a wire grid structure;
FIGS. 8-10 are schematic views illustrating an example of the process of preparing a cross prism for use in the polarization device;
FIG. 11 is a schematic plan view illustrating a first modified example of the cross prism for use in the polarization device;
FIG. 12 is a schematic plan view illustrating a second modified example of the cross prism;
FIGS. 13 and 14 illustrate light paths of light incident on the cross prism illustrated in FIG. 12;
FIG. 15 is a schematic plan view illustrating a third modified example of the cross prism;
FIGS. 16A-16C are schematic plan views illustrating a fourth modified example of the cross prism, and light paths of light incident on the cross prism;
FIGS. 17A-17C are schematic plan views illustrating the cross prisms having different shapes for use in the polarization device;
FIG. 18 is a schematic view illustrating the construction of an imaging apparatus;
FIG. 19 is a schematic view illustrating the construction of a first example of the imaging apparatus;
FIG. 20 is a schematic view illustrating an application example of the first example of the imaging apparatus;
FIG. 21 is a schematic view illustrating an example of image formed in a monitor of the imaging apparatus;
FIGS. 22 and 23 are schematic views illustrating the construction of a second example of the imaging apparatus;
FIG. 24 is a schematic view illustrating an application example of the second example of the imaging apparatus;
FIGS. 25 and 26 are schematic views illustrating the construction of a third example of the imaging apparatus;
FIGS. 27 and 28 are schematic views illustrating the construction of a fourth example of the imaging apparatus;
FIG. 29 is a schematic view illustrating the construction of a fifth example of the imaging apparatus;
FIG. 30 is a plan view illustrating an object to be inspected using the imaging apparatus;
FIG. 31 is a schematic view illustrating an image of the object obtained by using the imaging apparatus;
FIGS. 32 and 33 are schematic views illustrating the construction of a sixth example of the imaging apparatus;
FIG. 34 is a schematic view illustrating an application example of the sixth example of the imaging apparatus;
FIGS. 35 and 36 are schematic views illustrating the construction of a seventh example of the imaging apparatus;
FIGS. 37 and 38 are schematic views illustrating the construction of an eighth example of the imaging apparatus; and
FIG. 39 is a schematic view illustrating an application example of the eighth example of the imaging apparatus.

### DETAILED DESCRIPTION OF THE INVENTION

Hereinafter, the polarization device according to an embodiment of the present invention will be described.

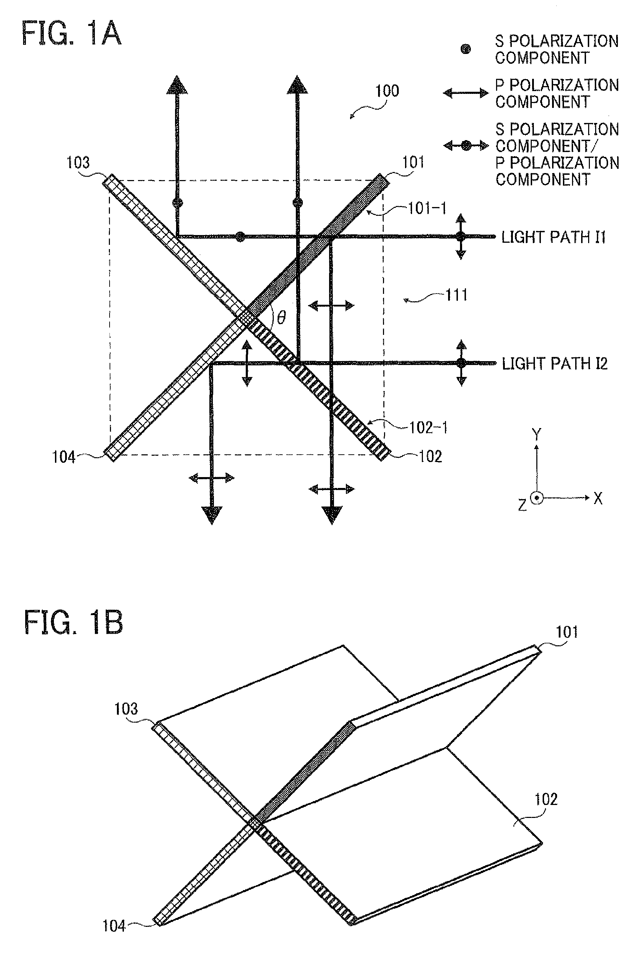

FIGS. 1A and 1B are respectively a schematic plan view and a schematic perspective view illustrating the construction of a polarization device according to an example.

Referring to FIGS. 1A and 1B, a polarization device 100 includes at least two polarization plates. A first polarization plate 101 has a first polarization plane 101-1 bearing thereon a polarizer layer having a wire grid structure. A second polarization plate 102 is set so that the edge thereof is contacted with the edge of the first polarization plate 101 at an angle of *θ*. In the polarization device illustrated in FIG. 1A, the angle *θ* is substantially a right angle. The second polarization plate 102 also has a second polarization plane 102-1, on which, for example, a polarizer layer having a wire grid structure is formed. The first polarization plane 101-1 and the second polarization plane 102-1 are opposed to each other as illustrated in FIG. 1A. The polarization direction of the wire grid of the first polarization plate 101 and the polarization direction of the wire grid of the second polarization plate 102 are perpendicular to each other. Since the first polarization plate 101 and the second polarization plate 102 do not have plate aberration, light incident on each of the first polarization plate 101 and the second polarization plate 102 can travel along a targeted light path. Hereinafter, a combination of the first polarization plate 101 and the second polarization plate 102 is sometimes referred to as a polarization portion.

Next, the light path of light incident on the polarization device 100 will be described.

A light beam incident on a side surface 111 of the polarization device 100 illustrated in FIG. 1A is separated into a light beam traveling along a light path in a +Y direction and a light beam traveling along a light path in a -Y direction depending on the polarization direction of the light beam. Specifically, in a case where a light beam is incident on the side surface 111 along a light path I1, a light beam having a polarization direction in the Y-axis direction (a polarization component parallel to the paper on which FIG. 1 is printed is hereinafter referred to as a P polarization component) is reflected by the polarizer layer of the first polarization plate 101. The reflected light passes through the polarizer layer of the second polarization plate 102, and travels in the -Y direction. In contrast, a light beam having a polarization direction in the Z-axis direction (a polarization component perpendicular to the paper on which FIG. 1 is printed is hereinafter referred to as a S polarization component) traveling along the light path I1 passes through the polarizer layer of the first polarization plate 101, and is then reflected by a reflection plate 103 so as to travel in the +Y direction.

In a case where a light beam is incident on the side surface 111 along a light path I2, a S polarization component of the light beam is reflected by the polarizer layer of the second polarization plate 102. The reflected light passes through the polarizer layer of the first polarization plate 101, and travels in the +Y direction. In contrast, a P polarization component of the light beam traveling along the light path I2 passes through the polarizer layer of the second polarization plate 102, and is then reflected by a reflection plate 104 so as to travel in the -Y direction.

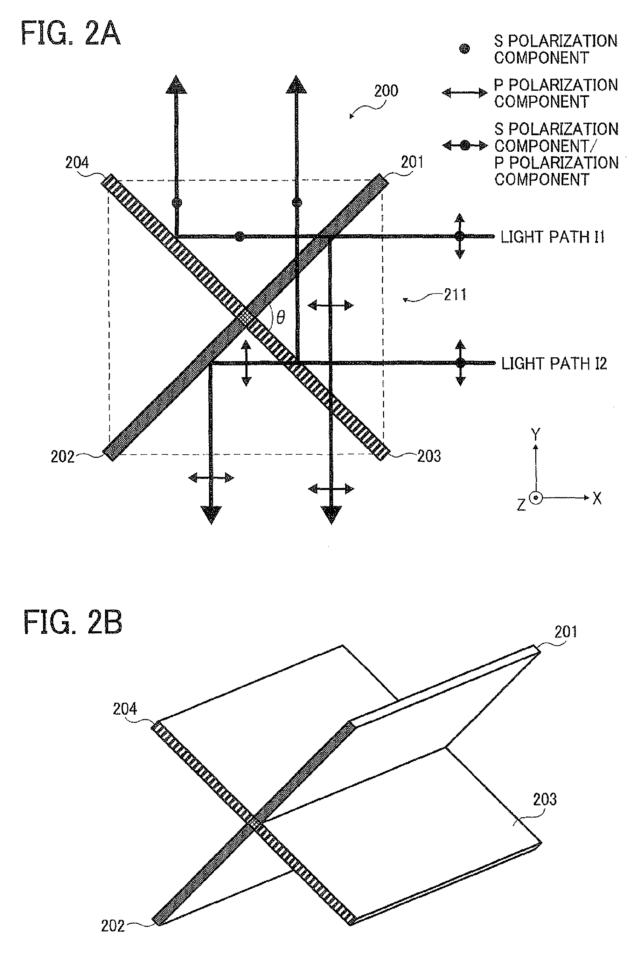

FIGS. 2A and 2B are respectively a schematic plan view and a schematic perspective view illustrating the construction of another polarization device.

A polarization device 200 illustrated in FIGS. 2A and 2B includes first polarization plates 201 and 202, and second polarization plates 203 and 204. The edges of the first polarization plates 201 and 202 are contacted with the edges of the second polarization plates 203 and 204 at an angle of *θ*. In the polarization device illustrated in FIG. 2A, the angle *θ* is substantially a right angle. The polarization plane of the first polarization plate 201 and the polarization plane of the second polarization plate 203 are opposed to each other. In addition, the polarization plane of the first polarization plate 202 and the polarization plane of the second polarization plate 204 are opposed to each other. For example, a polarizer layer having a wire grid structure is formed on the polarization plane of each of the first polarization plates 201 and 202 and the second polarization plates 203 and 204.

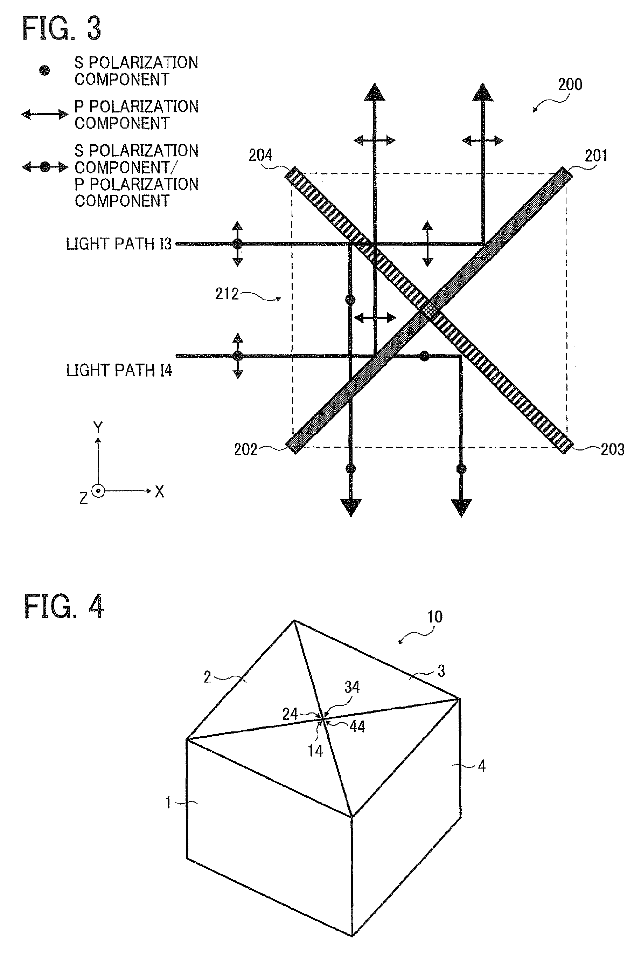

Next, the light path of light incident on the polarization device 200 will be described by reference to FIGS. 2 and 3.

A light beam incident on a side surface 211 of the polarization device 200 illustrated in FIG. 2A is separated into a light beam traveling along a light path in a +Y direction and a light beam traveling along a light path in a-Y direction depending on the polarization direction of the light beam. Specifically, in a case where a light beam is incident on the side surface 211 along a light path I1, a P polarization component of the light beam is reflected by the polarizer layer of the first polarization plate 201. The reflected light passes through the polarizer layer of the second polarization plate 203, and travels in the -Y direction. In contrast, a S polarization component of the light beam traveling along the light path I1 passes through the polarizer layer of the first polarization plate 201, and is then reflected by the polarizer layer of the second polarization plate 204 so as to travel in the +Y direction.

In a case where a light beam is incident on the side surface 211 of the polarization device 200 along a light path 12, a S polarization component of the light beam is reflected by the polarizer layer of the second polarization plate 203. The reflected light passes through the polarizer layer of the first polarization plate 201, and travels in the +Y direction. In contrast, a P polarization component of the light beam passes through the polarizer layer of the second polarization plate 203, and is then reflected by the polarizer layer of the first polarization plate 202 so as to travel in the -Y direction.

A light beam incident on a side surface 212 of the polarization device 200 illustrated in FIG. 3 is separated into a light beam traveling along a light path in a +Y direction and a light beam traveling along a light path in a -Y direction depending on the polarization direction of the light beam. Specifically, in a case where a light beam is incident on the side surface 212 along a light path I3, a S polarization component of the light beam is reflected by the second polarization plate 204. The reflected light passes through the first polarization plate 202, and travels in the -Y direction. In contrast, a P polarization component of the light beam traveling along the light path I3 passes through the second polarization plate 204, and is then reflected by the first polarization plate 201 so as to travel in the +Y direction.

In a case where a light beam is incident on the side surface 212 along a light path I4, a P polarization component of the light beam is reflected by the first polarization plate 202. The reflected light passes through the second polarization plate 204, and travels in the +Y direction. In contrast, a S polarization component of the light beam traveling along the light path I4 passes through the first polarization plate 202, and is then reflected by the second polarization plate 203 so as to travel in the -Y direction.

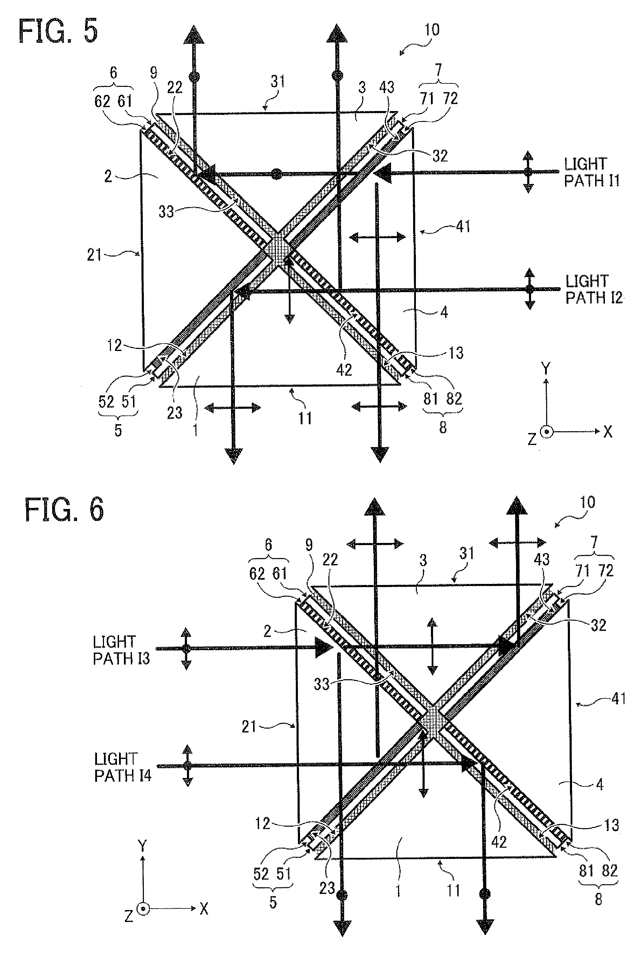

FIG. 4 is a schematic perspective view illustrating a cross prism for use in the polarization device, and FIG. 5 is a schematic plan view illustrating the construction of the cross prism. As illustrated in FIG. 4, a cross prism 10 includes four triangle-pole prisms 1, 2, 3 and 4, which are arranged such that tops 14, 24, 34 and 44 of the four prisms 1, 2, 3 and 4 face each other and in which the opposed triangle-pole prisms are fixedly adhered to each other with an adhesive. In addition, the above-mentioned polarization plate having a wire grid structure is arranged between two opposed prisms of the four prisms 1, 2, 3 and 4. By arranging triangle-pole prisms in such a manner, the plate aberration of the polarization plate can be decreased.

As illustrated in FIG. 5, the cross prism 10 has a planar shape of approximate square. The cross prism 10 includes the four isosceles right angle triangle-pole prisms 1, 2, 3 and 4, each of which is made of a material such as glass, polarization plates 5, 6, 7 and 8, each of which has a wire grid structure, and an adhesive layer 9 made of an adhesive. The adhesive layer 9 and the polarization plates 5, 6, 7 and 8 are arranged between two opposed prisms of the four isosceles right angle triangle-pole prisms 1, 2, 3 and 4.

The triangle-pole prism 1 has three side surfaces 11, 12 and 13, and the side surfaces 12 and 13 form the top 14 (illustrated in FIG. 4) having substantially a right angle. The triangle-pole prism 1 is an isosceles right angle triangle-pole prism. The triangle-pole prism 2 has three side surfaces 21, 22 and 23, and the side surfaces 22 and 23 form the top 24 (illustrated in FIG. 4) having substantially a right angle. The triangle-pole prism 2 is an isosceles right angle triangle-pole prism. The triangle-pole prism 3 has three side surfaces 31, 32 and 33, and the side surfaces 32 and 33 form the top 34 (illustrated in FIG. 4) having substantially a right angle. The triangle-pole prism 3 is an isosceles right angle triangle-pole prism. The triangle-pole prism 4 has three side surfaces 41, 42 and 43, and the side surfaces 42 and 43 form the top 44 (illustrated in FIG. 4) having substantially a right angle. The triangle-pole prism 4 is an isosceles right angle triangle-pole prism. The triangle-pole prisms 1, 2, 3 and 4 are arranged such that the tops 14, 24, 34 and 44 face with each other as illustrated in FIG. 4.

The polarization plate 5 has a structure such that a polarizer layer 52 is formed on a flat substrate 51, wherein the polarizer layer 52 is covered with a packed bed (not shown). Among light beams traveling in the ±X directions, a light beam having a Y polarization direction is reflected by the polarization plate 5, and a light beam having a Z polarization direction passes through the polarization plate 5. The polarization plate 6 has a structure such that a polarizer layer 62 is formed on a flat substrate 61, wherein the polarizer layer 62 is covered with a packed bed (not shown). Among light beams traveling in the ± X directions, a light beam having a Y polarization direction passes through the polarization plate 6, and a light beam having a Z polarization direction is reflected by the polarization plate 6. The polarization plate 7 has a structure such that a polarizer layer 72 is formed on a flat substrate 71, wherein the polarizer layer 72 is covered with a packed bed (not shown). Among light beams traveling in the ±X directions, a light beam having a Y polarization direction is reflected by the polarization plate 7, and a light beam having a Z polarization direction passes through the polarization plate 7. The polarization plate 8 has a structure such that a polarizer layer 82 is formed on a flat substrate 81, wherein the polarizer layer 82 is covered with a packed bed (not shown). Among light beams traveling in the ±X directions, a light beam having a Y polarization direction passes through the polarization plate 8, and a light beam having a Z polarization direction is reflected by the polarization plate 8.

The polarization plate 5 is arranged such that the polarizer layer 52 thereof is closer to the side surface 23 of the triangle-pole prism 2 than the flat substrate 51 thereof. The packed bed (not shown) covering the polarizer layer 52 is adhered to the side surface 23 with an adhesive. The polarization plate 6 is arranged such that the polarizer layer 62 thereof is closer to the side surface 22 of the triangle-pole prism 2 than the flat substrate 61. The packed bed (not shown) covering the polarizer layer 62 is adhered to the side surface 22 with an adhesive. The polarization plate 7 is arranged such that the polarizer layer 72 thereof is closer to the side surface 43 of the triangle-pole prism 4 than the flat substrate 71 thereof. The packed bed (not shown) covering the polarizer layer 72 is adhered to the side surface 43 with an adhesive. The polarization plate 8 is arranged such that the polarizer layer 82 thereof is closer to the side surface 42 of the triangle-pole prism 4 than the flat substrate 81. The packed bed (not shown) covering the polarizer layer 82 is adhered to the side surface 42 with an adhesive.

In addition, the flat substrate 51 and the side surface 12 of the triangle-pole prism 1 are adhered to each other with an adhesive. The flat substrate 61 and the side surface 33 of the triangle-pole prism 3 are adhered to each other with an adhesive. The flat substrate 71 and the side surface 32 of the triangle-pole prism 3 are adhered to each other with an adhesive. The flat substrate 81 and the side surface 13 of the triangle-pole prism 1 are adhered to each other with an adhesive.

The adhesive layer 9 is formed at each of the gaps formed by the triangle-pole prisms 1,23 and 4 and the polarization plates 5, 6, 7 and 8. The adhesive layers 9 are formed by performing one hardening treatment on the applied adhesive to fixedly adhere the four triangle-pole prisms with the four polarization plates. In this regard, adhesives having a good combination of translucency, adhesiveness to glass, and accuracy, such as ultraviolet curable adhesives, are preferably used.

Next, the light paths of light incident on the cross prism 10 will be described by reference to FIGS. 5 and 6.

As illustrated in FIG. 5, a light beam incident on the side surface 41 of the triangle-pole prism 4 is separated so as to have light paths in the +Y and -Y directions depending on the polarization directions thereof. Specifically, a P polarization component of the light beam, which is incident on the side surface 41 along a light path I1 and which has a Y-axis polarization direction, is reflected by the polarizer layer 72 of the polarization plate 7, and passes through the polarizer layer 82 of the polarization plate 8 to travel in the -Y direction. In contrast, a S polarization component of the light beam, which is incident on the side surface 41 along the light path I1 and which has a Z-axis polarization direction, passes through the polarizer layer 72 of the polarization plate 7, and is reflected by the polarizer layer 62 of the polarization plate 6 to travel in the +Y direction.

A S polarization component of the light beam incident on the side surface 41 along a light path I2 is reflected by the polarizer layer 82 of the polarization plate 8, and passes through the polarizer layer 72 of the polarization plate 7 to travel in the +Y direction. In contrast, a P polarization component of the light beam incident on the side surface 41 along the light path I2 passes through the polarizer layer 82 of the polarization plate 8, and is reflected by the polarizer layer 52 of the polarization plate 5 to travel in the -Y direction.

As illustrated in FIG. 6, a light beam incident on the side surface 21 of the triangle-pole prism 2 is separated so as to have light paths in the +Y and -Y directions depending on the polarization directions thereof. Specifically, a S polarization component of the light beam incident on the side surface 21 along a light path I3 is reflected by the polarizer layer 62 of the polarization plate 6, and passes through the polarizer layer 52 of the polarization plate 5 to travel in the -Y direction. In contrast, a P polarization component of the light beam incident on the side surface 21 along the light path I3 passes through the polarizer layer 62 of the polarization plate 6, and is reflected by the polarizer layer 72 of the polarization plate 7 to travel in the +Y direction.

A P polarization component of the light beam incident on the side surface 21 along a light path I4 is reflected by the polarizer layer 52 of the polarization plate 5, and passes through the polarizer layer 62 of the polarization plate 6 to travel in the +Y direction. In contrast, a S polarization component of the light beam incident on the side surface 21 along the light path 14 passes through the polarizer layer 52 of the polarization plate 5, and is reflected by the polarizer layer 82 of the polarization plate 8 to travel in the -Y direction.

In this regard, each of the polarization plates 5, 6, 7 and 8 is a polarization plate, which transmits a specific polarization component of a light beam while reflecting a polarization component of the light beam having a polarization direction perpendicular to the polarization direction of the specific polarization component. In this cross prism 10, the polarization plates 5, 6, 7 and 8 have a structure such that the polarizer layer 52, 62, 72 or 82 is formed on the flat substrate 51, 61, 71 or 81. A polarizer layer such as polarizer layers having a wire grid structure is used for the polarizer layers 52, 62, 72 and 82. Specific examples of the material for use as the flat substrates 51, 61, 71 and 81 include transparent materials capable of transmitting light in a specific region (such as visible region and infrared region) such as glass, sapphire and quartz. In this cross prism 10, glass is preferably used, and particularly quartz glass (having a refractive index of 1.46), and TEMPAX glass (having a refractive index of 1.51) are preferably used because of having good durability and low costs. In addition, plastics can also be used for the flat substrates. Particularly, it is preferable to use a film-shaped plastic for the flat substrates because the gaps between the triangle-pole prisms can be narrowed.

Next, the polarizer layer will be described.

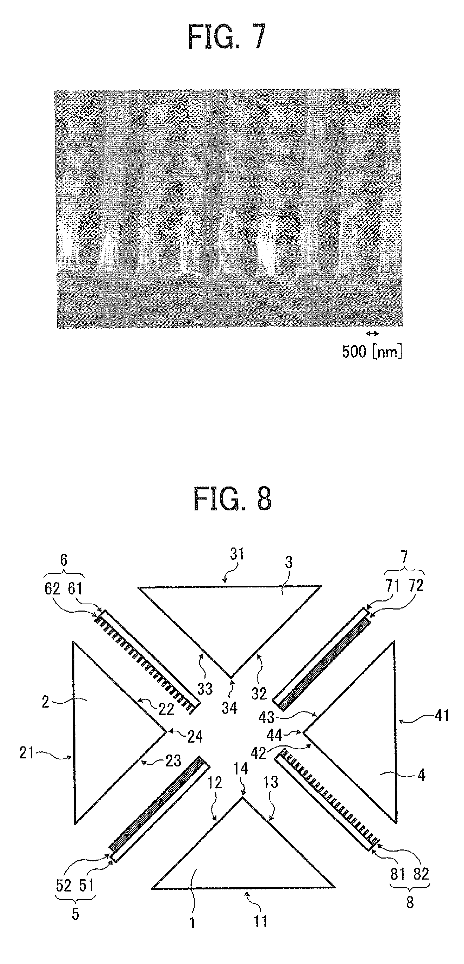

The polarizer layers 52, 62, 72 and 82 of the polarization plates 5, 6, 7 and 8 have such a wire grid structure as illustrated in FIG. 7. As illustrated in FIG. 7, the surface of the polarizer layers is a concave-convex surface. The wire grid structure can be formed, for example, by arranging wires of a metal such as aluminum (i.e., electroconductive wires) extending in a direction side by side with a predetermined gap therebetween. The polarizer layer illustrated in FIG. 7 reflects light having a polarization direction parallel to the direction of the groove of the polarizer layer, and transmits light having a polarization direction perpendicular to the direction of the groove of the polarizer layer. When the pitch of the wire grid is sufficiently small compared to the wavelength of incident light (such as visible light with a wavelength of from 400nm to 800nm), for example, when the pitch is one half or less of the wavelength of incident light, the following effects can be produced.

Specifically, the polarizer layer substantially reflects light having an electric field vector which vibrates in a direction parallel to the longitudinal direction of the metal wires, and substantially transmits light having an electric field vector which vibrates in a direction perpendicular to the longitudinal direction of the metal wires. Therefore, the polarizer layer can be used as a polarizer layer capable of forming single polarization light. In polarizer layers having a wire grid structure, when the cross-section area of the metal wire increases, the extinction ratio increases. When the width of the metal wire is greater than the predetermined width based on the cycle of the wire grids (i.e., when the ratio of the width of the metal wire to the total width of the metal wire and the groove is greater than a predetermined value), the translucency of the polarizer layer decreases. In addition, when the metal wire is cut in a direction perpendicular to the longitudinal direction of the metal wires and the cross section of the metal wires has a tapered shape, the polarizer layer has small chromatic dispersion in translucency and degree of polarization over wide wavelength regions, and has high extinction ratio.

In addition, the polarizer layer having a wire grid structure has the following advantages.

One of the advantages is that the wire grid structure can be formed by using well known semiconductor production methods. Specifically, after a thin aluminum layer is formed on a flat plate by vapor deposition, patterning is performed, and then a wire grid structure having a sub-wavelength concave-convex structure is formed by a method such as metal etching. Another advantage is that since the metal grid structure is formed using a metal such as aluminum and titanium, the metal grid has good heat resistance. Therefore, the polarizer layer can be used even under high temperature conditions. Since the wire grid structure is a structure on the order of sub-microns, it is preferable to protect the polarizer layer so that the polarizer layer is not damaged in an assembling process.

When the polarizer layer is adhered to another material (such as a prism in this case), the polarizer layer is preferably arranged so as to be flat. Therefore, it is preferable to form a flattening layer. Specifically, a filler is contained in the grooves (i.e., concaves) present between metal wires. In this regard, inorganic materials having a refractive index not higher than the refractive index of the flat plate are preferably used for the filler. In this cross prism 10, the filler is present on the upper surface of the metal wire as well as the grooves. Since it is preferable for the filler to have properties such that the convex-concave surface of the polarizer layer is flattened and the function of the polarizer layer is not deteriorated thereby, materials having no polarization function are preferably used. In addiction, materials having a low refractive index similar to the refractive index (i.e., 1.0) of air are preferably used. From these points of view, porous ceramics in which fine voids are dispersed are preferable. Specific examples thereof include porous silica (SiO₂), porous magnesium fluoride (MgF), and porous alumina (Al₂O₃).

The refractive index of such porous ceramics depends on the number of voids therein or the volume of the voids. When the main component of the flat substrate is quartz or glass, porous silica (n=1.22 - 1.26) is preferably used. Forming such a flattening layer (filler) on the polarizer layer can be preferably performed by using a SOG (Spin On Glass) method. Specifically, a solution in which silanol (Si(OH)₄) is dissolved in an alcohol is applied on a polarizer layer on a flat substrate by spin coating, and the coated liquid is subjected to a heat treatment so that the solvent is evaporated and silanol is subjected to a dehydration polymerization reaction, thereby forming a flattening layer. Since the polarizer layer has a sub-wavelength wire grid structure, the polarizer layer has poor mechanical strength, and the metal wires are easily damaged by a weak external force. Since it is preferable that the polarization plate of the cross prism 10 is adhered to the triangle-pole prism, it is possible that the polarization plate is contacted with a triangle-pole prism when preparing the cross prism 10.

Since the surface of the polarizer layer is covered with the filler (the flattening layer in the cross prism), the wire grid structure of the polarizer layer is prevented from being damaged when the polarizer layer is contacted with a triangle-pole prism. In addition, by filling the concave portions (grooves) of the wire grid of the polarizer layer with such a filler, entering of a foreign material into the concave portions can be prevented.

Next, a method for preparing a polarization selection type cross prism, which is an example of the cross prism for use in the polarization device according to an example will be described.

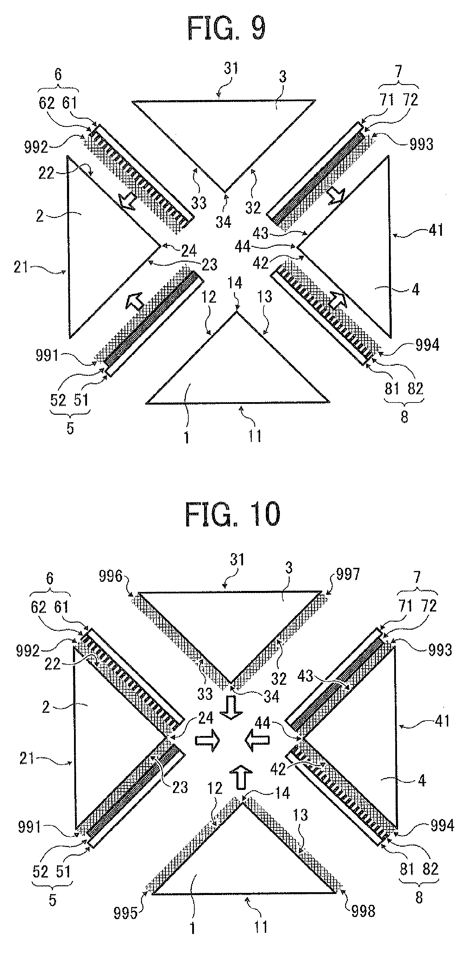

FIGS. 8-10 are schematic views illustrating an example of the process of preparing the cross prism for use in the polarization device. FIG. 8 illustrates a process of preparing triangle-pole prisms, FIG. 9 illustrates a process of arranging polarization plates, and FIG. 10 illustrates a process of arranging the triangle-pole prisms.

In the triangle-pole preparing process illustrated in FIG. 8, initially the triangle-pole prisms 1, 2, 3 and 4 are prepared. For example, the prism 1 is prepared such that the side surfaces 12 and 13 are crossed at substantially a right angle, and the prism is an isosceles right triangle-pole prism. Similarly, the triangle-pole prisms 2, 3 and 4 are prepared. In addition, as mentioned above, the polarization plates 5, 6, 7 and 8 are prepared. Next, in the arranging process illustrated in FIG. 9, for example, adhesives 991, 992, 993 and 994 are applied on the surfaces of polarization plates bearing the polarizer layer thereon, and then the polarization plates are arranged as illustrated in FIG. 9. The polarization plates 5 and 6 are respectively set on the side surfaces 22 and 23 of the triangle-pole prism 2, and the polarization plates 7 and 8 are respectively set on the side surfaces 42 and 43 of the triangle-pole prism 4. In this regard, adhesives having a good combination of translucency, adhesiveness to glass, and accuracy, such as ultraviolet curable adhesives, are used as the adhesives 991, 992, 993 and 994.

Next, in the positioning process illustrated in FIG. 10, the triangle-pole prisms 1, 2, 3 and 4 are arranged such that the tops 14, 24, 34 and 44 face each other, resulting in positioning of the prisms. In this regard, adhesives 995-998 are applied to the side surfaces 12, 13, 32 and 33 of the prisms 1 and 3.

Next, a curing process is performed. In the curing process, for example ultraviolet rays irradiate the adhesives 991-998 to cure the adhesives under the same curing conditions, thereby fixedly adhering the prisms 1-4 and the polarization plates 5-8 to each other. Thus, the quadrangular cross prism illustrated in FIG. 4 can be prepared. In this regard, by using triangle-pole prisms and polarization plates, which have a long length in the Z-axis direction, for the prisms 1-4 and the polarization plates 5-8, multiple quadrangular cross prisms can be easily prepared by cutting the prisms and the polarization plates after the adhering/curing process. This method performs one arrangement process and one adhering/curing process.

Next, a first modified example of the cross prism will be described.

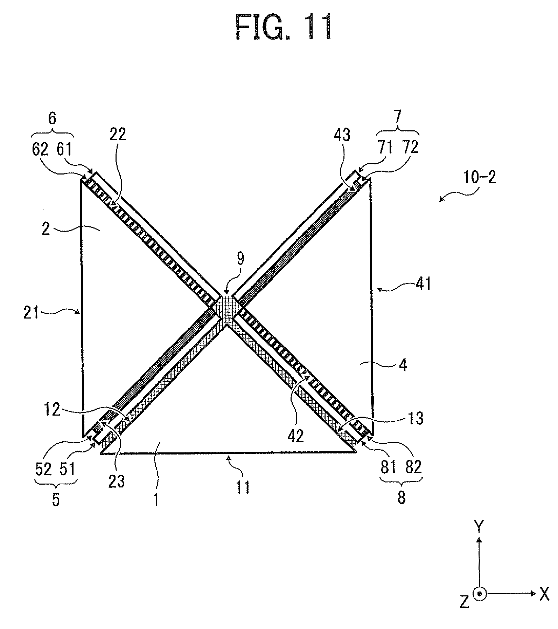

The construction of the cross prism for use in the polarization device according to an example is not limited to the above-mentioned construction. For example, a modified example 10-2 having such construction as illustrated in FIG. 11 can also be used. The modified cross prism 10-2 is different from the cross prism illustrated in FIGS. 5 and 6 in that the triangle-pole prism 3 is not used. In this modified cross prism, light paths going through the prisms 1 and 2, and light paths going through the prisms 1 and 4 are used. Depending on the application of the polarization device, such a modified cross prism, which does not use light paths going through the prism 3, can be used.

Next, a second modified example of the cross prism will be described.

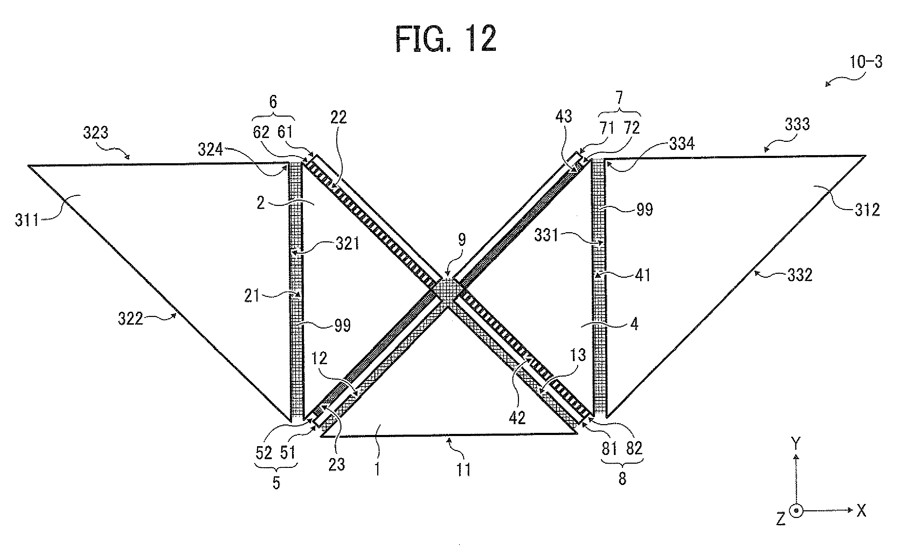

FIG. 12 is a schematic plan view illustrating the construction of a second modified example 10-3. The second modified cross prism 10-3 has construction such that triangle-pole prisms 311 and 312 are respectively adhered to the side surface 21 of the prism 2 and the side surface 41 of the prism 4 with an adhesive layer 99 using an adhesive. The triangle-pole prism 311 is an isosceles right triangle-pole prism having three side surfaces 321, 322 and 323, wherein the surfaces 321 and 323 form a top 324 having substantially a right angle. The triangle-pole prism 312 is an isosceles right triangle-pole prism having three side surfaces 331, 332 and 333, wherein the surfaces 331 and 333 form a top 334 having substantially a right angle. The triangle-pole prisms 311 and 312 can be set so as to close to the side surface 21 of the prism 2 and the side surface 41 of the prism 4, respectively, instead of adhesion (bonding).

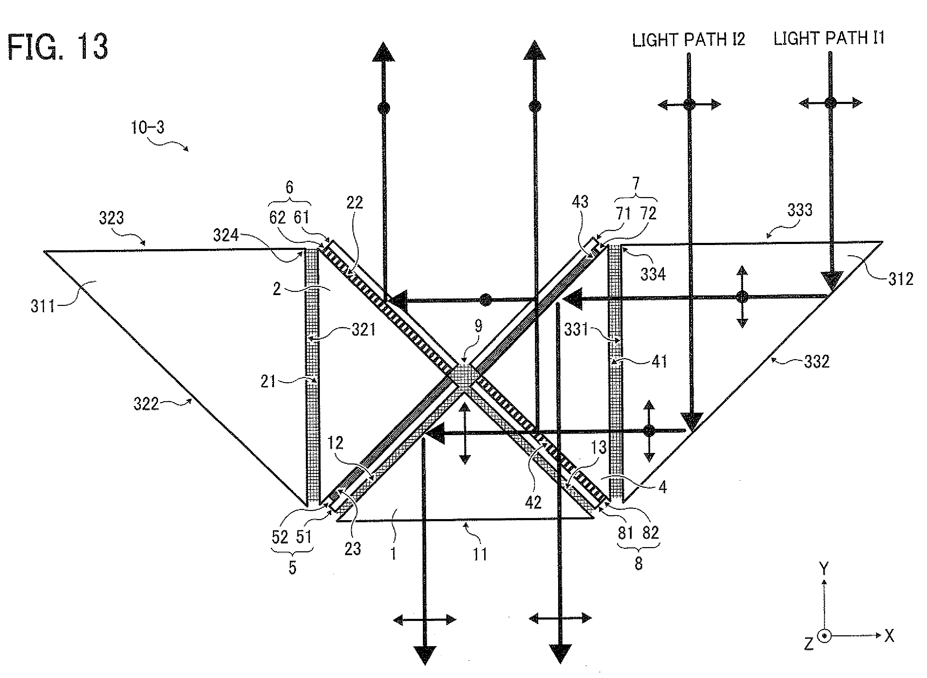

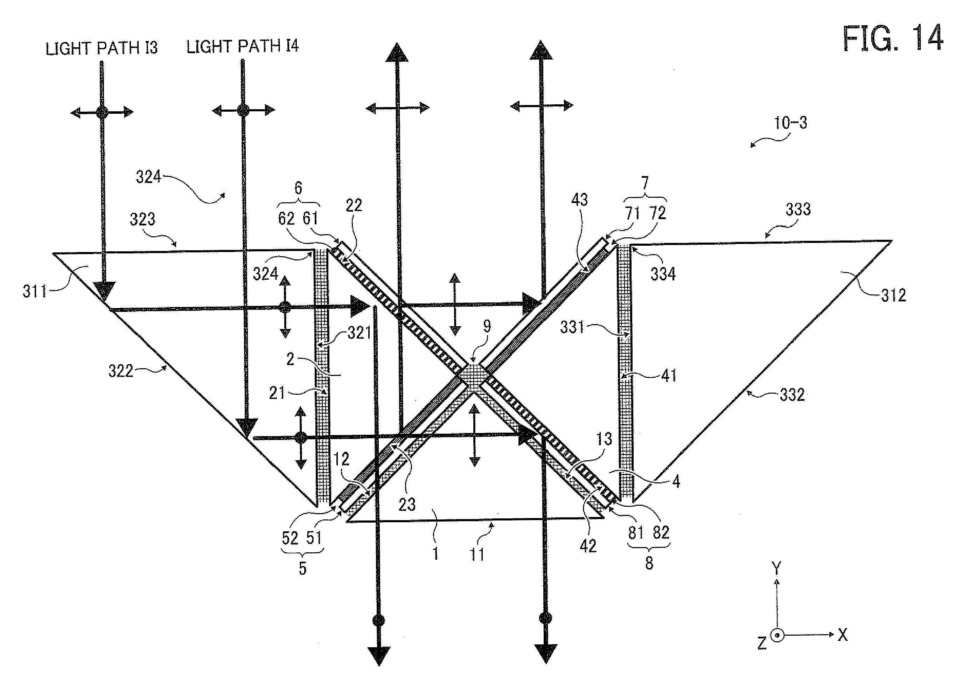

Next, the light paths in the cross prism 10-3 will be described by reference to FIGS. 13 and 14.

As illustrated in FIG. 13, a light beam incident on the side surface 333 of the triangle-pole prism 312 is separated so as to have light paths in the +Y and -Y directions depending on the polarization directions thereof. Specifically, a P polarization component of the light beam incident on the side surface 333 along a light path I1 is reflected by the reflection surface 332 so that the light path is changed by 90 degree, and is then reflected by the polarizer layer 72 of the polarization plate 7 while passing through the polarizer layer 82 of the polarization plate 8 to travel in the -Y direction. In contrast, a S polarization component of the light beam incident on the side surface 333 along the light path I1 is reflected by the reflection surface 332 so that the light path is changed by 90 degree, and then passes through the polarizer layer 72 of the polarization plate 7. The light beam is then reflected by the polarizer layer 62 of the polarization plate 6 to travel in the +Y direction.

A S polarization component of the light beam incident on the side surface 333 along a light path I2 is reflected by the reflection surface 332 so that the light path is changed by 90 degree, and is then reflected by the polarizer layer 82 of the polarization plate 8. The light beam passes through the polarizer layer 72 of the polarization plate 7, and travels in the +Y direction. In contrast, a P polarization component of the light beam incident on the side surface 333 along the light path I2 is reflected by the reflection surface 332 so that the light path is changed by 90 degree, and then passes through the polarizer layer 82 of the polarization plate 8. The light beam is then reflected by the polarizer layer 52 of the polarization plate 5 to travel in the -Y direction.

As illustrated in FIG. 14, a light beam incident on the side surface 323 of the triangle-pole prism 311 is separated so as to have light paths in the +Y and -Y directions depending on the polarization directions thereof. Specifically, a S polarization component of the light beam incident on the side surface 323 along a light path I3 is reflected by the reflection surface 322 so that the light path is changed by 90 degree, and is then reflected by the polarizer layer 62 of the polarization plate 6 while passing through the polarizer layer 52 of the polarization plate 5 to travel in the -Y direction. In contrast, a P polarization component of the light beam incident on the side surface 323 along the light path 13 is reflected by the reflection surface 322 so that the light path is changed by 90 degree, and then passes through the polarizer layer 62 of the polarization plate 6. The light beam is then reflected by the polarizer layer 72 of the polarization plate 7 to travel in the +Y direction.

A P polarization component of the light beam incident on the side surface 323 along a light path 14 is reflected by the reflection surface 322 so that the light path is changed by 90 degree, and is then reflected by the polarizer layer 52 of the polarization plate 5 to travel in the +Y direction. In contrast, a S polarization component of the light beam incident on the side surface 323 along the light path I4 is reflected by the reflection surface 322 so that the light path is changed by 90 degree, and then passes through the polarizer layer 52 of the polarization plate 5. The light beam is then reflected by the polarizer layer 82 of the polarization plate 8 to travel in the -Y direction.

Next, a third modified example of the cross prism will be described.

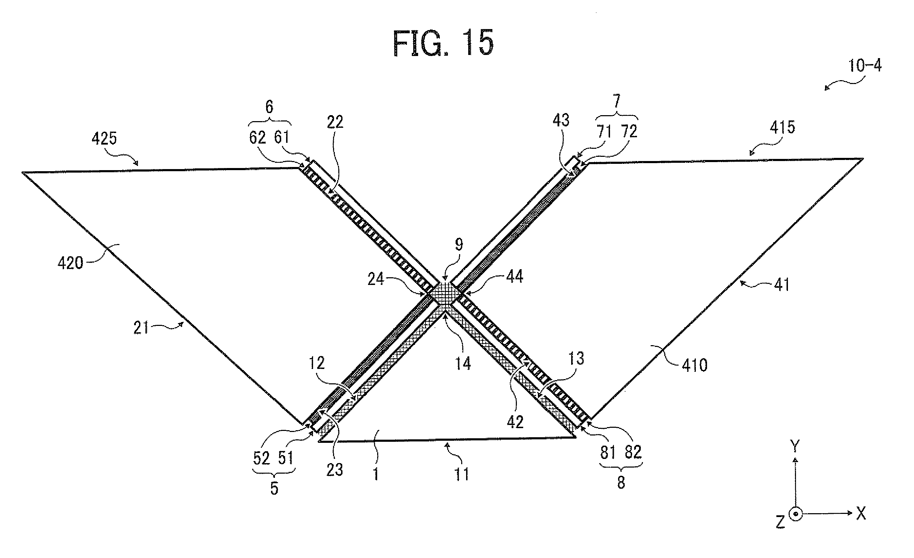

FIG. 15 is a schematic view illustrating the construction of a third modified example 10-4 of the cross prism. The cross prism 10-4 illustrated in FIG. 15 is different from the cross prism 10-3 illustrated in FIG. 12 in that quadrangle-pole prisms 410 and 420 having the function of the combination of the triangle-pole prisms 311 and 2 or the function of the combination of the triangle-pole prisms 312 and 4 are used instead of the combination prisms. In the cross prism 10-4, a side surface 415 of the quadrangle-pole prism 410 and a side surface 425 of the quadrangle-pole prism 420 are parallel to the side surface 11 of the triangle-pole prism 1. The cross prism 10-4 has advantages such that the adhering process is not performed, resulting in decrease in costs, and misalignment of prisms caused in the adhering process can be avoided, thereby preventing light beams from deviating from the desired light paths.

Next, a fourth modified example of the cross prism will be described.

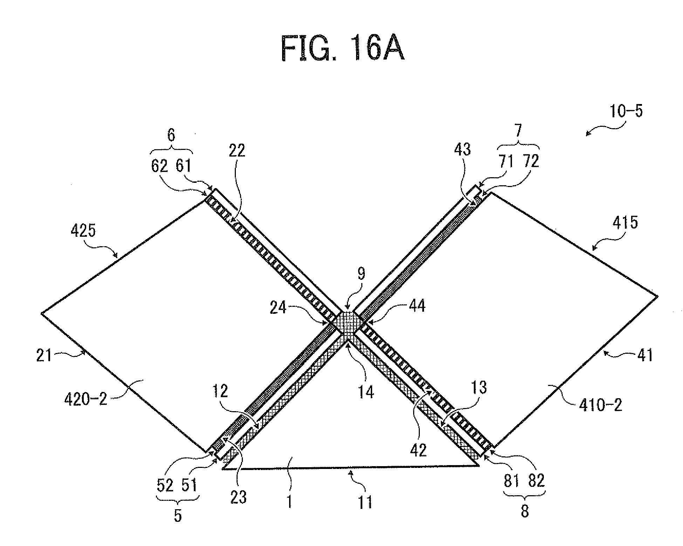

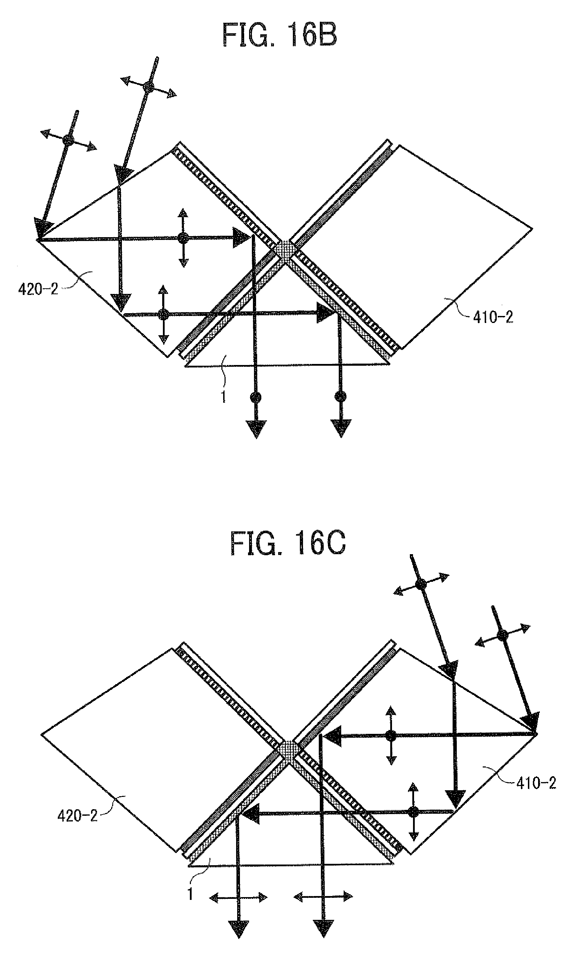

FIG. 16 is a schematic view illustrating the construction of a fourth modified example 10-5 of the cross prism. The cross prism 10-5 illustrated in FIG. 16 is different from the cross prism 10-4 illustrated in FIG. 15 in that the quadrangle-pole prisms 410 and 420 are respectively replaced with quadrangle-pole prisms 410-2 and 420-2, and the side surfaces 415 and 425 of the quadrangle-pole prisms 410-2 and 420-2 are not parallel to the side surface 11 of the triangle-pole prism 1. The cross prism 10-5 has an advantage such that the prism can be used for a case where light is incident on the prism at an angle as illustrated in FIGS. 16B and 16C.

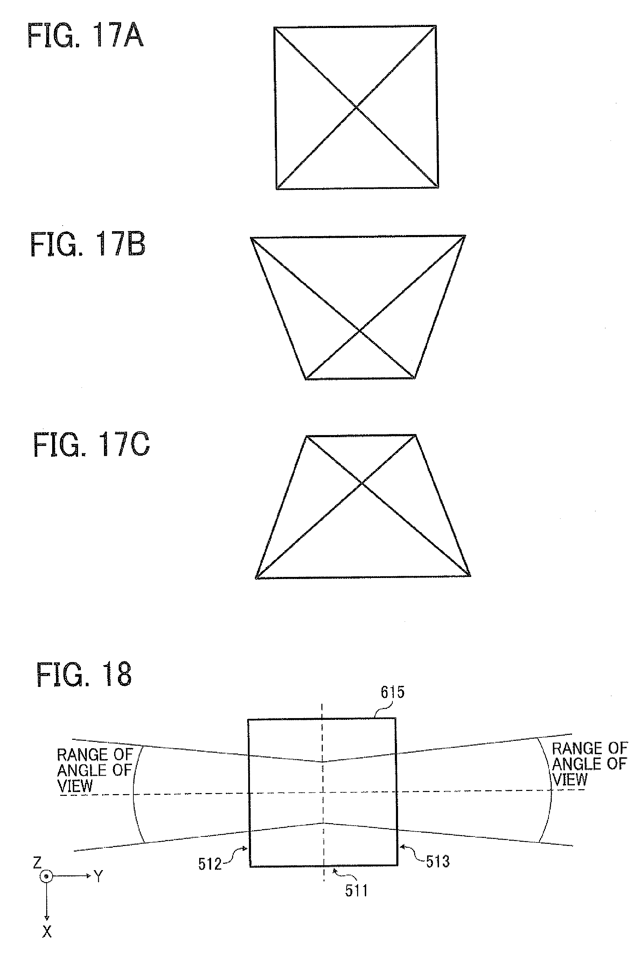

In this regard, the shape of the quadrangle-pole prisms 410-2 and 420-2 is not particularly limited, and can be a square shape (illustrated in FIG. 17A) or a trapezoidal shape (illustrated in FIGS. 17B and 17C). By changing the shape of the quadrangle-pole prisms 410-2 and 420-2 of the cross prism 10-5, the polarization angle of the cross prism is not limited to 90 degree, and can be changed.

Next, the imaging apparatus according an example, which uses the cross prism mentioned above, will be described.

FIG. 18 illustrates an example of the imaging apparatus. In the imaging apparatus illustrated in FIG. 18, a P polarization component of a light beam incident on a side surface 512 of a cross prism 615 and a S polarization component of a light beam incident on a side surface 513 of the cross prism 615 are subjected to light path synthesis so as to travel toward a side surface 511. Applications of the imaging apparatus will be described later. In addition, the imaging apparatus illustrated in FIG. 18 can be used as an imaging apparatus in which a light beam incident on the side surface 511 is separated into a P polarization component of the light beam traveling in the direction of the side surface 512 and a S polarization component of the light beam traveling in the direction of the side surface 513. Specifically, the imaging apparatus can be used as an imaging apparatus in which a light source is arranged on the side of the side surface 511, and light incident on the side surface 511 is subjected to polarization branching.

Next, the construction of the imaging apparatus will be described.

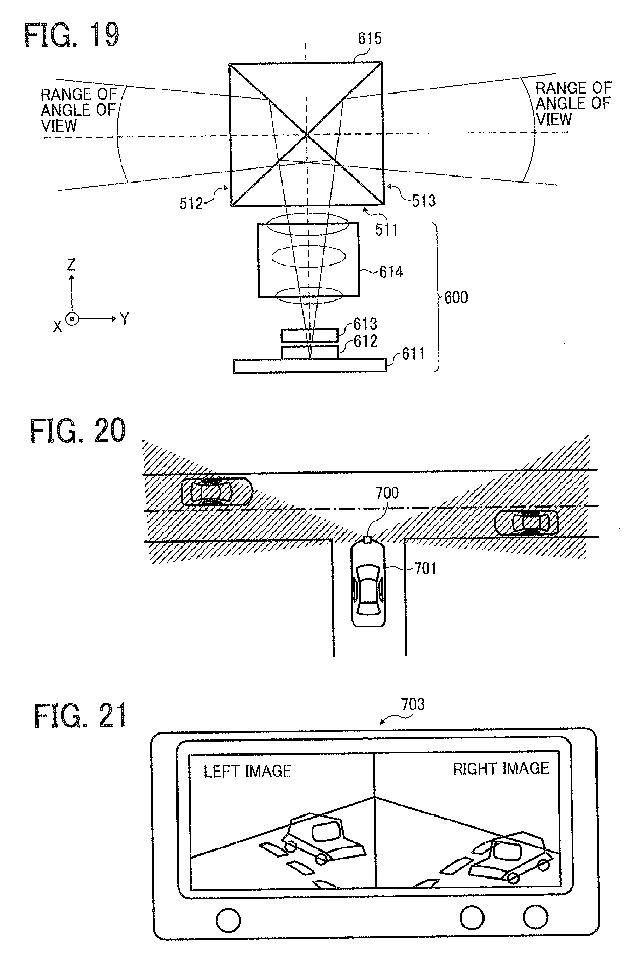

FIG. 19 illustrates Example 1 of the imaging apparatus. As illustrated in FIG. 19, Example 1 of the imaging apparatus has construction such that an image sensor 612 is arranged on a substrate 611, and an optical filter 613 is set on the image sensor 612 so as to be contacted with the image sensor. The imaging apparatus photographs an object via an imaging lens 614. In this imaging apparatus, the substrate 611, the image sensor 612, the optical filter 613, and the imaging lens 614 serve as an imaging device (optical system) 600. The polarization selection type cross prism 615 is set in front of the lens 614. In this regard, a region segmentation type polarization filter, which can extract P polarization information and S polarization information in a unit of pixel, is used for the optical filter 613. In addition, the cross prism 615 subjects a S polarization component of a light beam incident on the side surface 512 from the -Y direction and a P polarization component of a light beam incident on the side surface 513 from the +Y direction to polarization reflection so that the light beams travel toward the side surface 511. Therefore, an image of a S polarization component of the light beam traveling from the -Y direction and another image of a P polarization component of the light beam traveling from the +Y direction can be extracted. In a conventional imaging apparatus using a single image sensor and a single lens, an object present in the +Z direction is detected. In contrast, in this imaging apparatus, objects in the two directions (i.e., ±Y directions) can be imaged. In addition, images of objects in the two directions can be independently detected at the same time.

For example, the imaging apparatus can be set on a car as illustrated in FIG. 20 to observe the left and right sides of the car. Specifically, the imaging apparatus includes an imaging apparatus 700, which is the imaging apparatus according to an example and which is set on a center front portion of a car 701 below the bumper, and a monitor 703 (illustrated in FIG. 21), which is set on an instrument panel of the car 701. The image information on the left and right sides which is obtained by the imaging apparatus 700 is converted to image signals, and images on the left and right sides are illustrated in the monitor 703. Thus, information on the left and right sides of the car 701 can be obtained even at an intersection with poor visibility, thereby making it possible for a driver to drive safely.

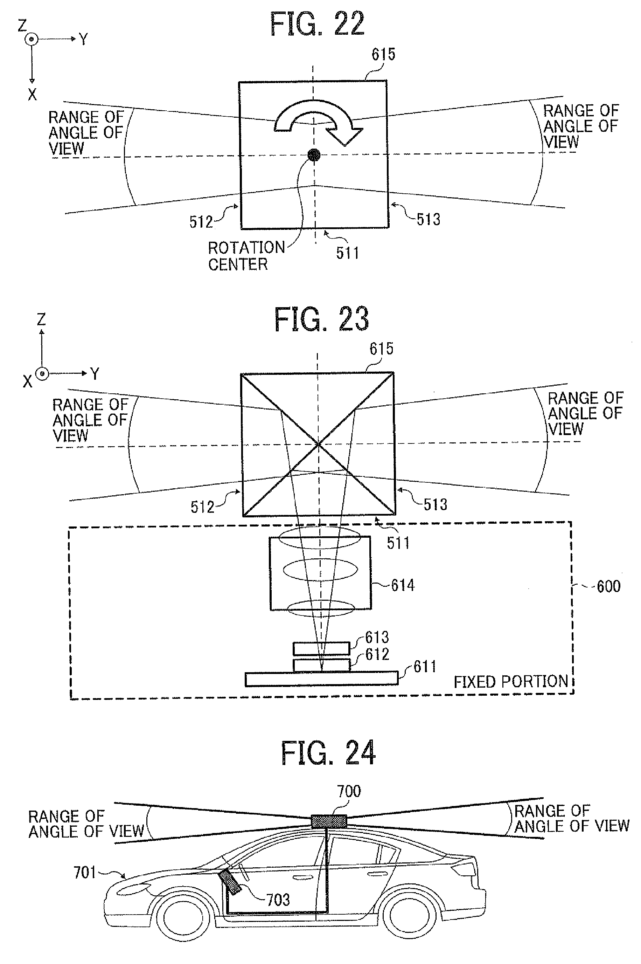

FIGS. 22 and 23 illustrate the construction of Example 2 of the imaging apparatus according to an embodiment.

As illustrated in FIG. 23, Example 2 of the imaging apparatus has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In this regard, a region segmentation type polarization filter, which can extract P polarization information and S polarization information in a unit of pixel, is used for the optical filter 613. In addition, the cross prism 615 subjects a S polarization component of a light beam incident on the side surface 512 from the -Y direction and a P polarization component of a light beam incident on the side surface 513 from the +Y direction to polarization reflection so that the light beams travel toward the side surface 511. Therefore, an image of the S polarization component of the light beam traveling from the -Y direction and another image of the P polarization component of the light beam traveling from the +Y direction can be extracted.

The imaging apparatus illustrated in FIG. 22 is different from the imaging apparatus illustrated in FIG. 18 in that the polarization selection type cross prism 615 can be rotated on the Z- axis although the optical system (imaging device) 600 of from the substrate 611 to the lens 614 is fixed similarly to the optical system of the imaging apparatus illustrated in FIG. 18. Any known rotating methods such as methods using a motor can be used for rotating the cross prism 615. Since the cross prism 615 can be rotated, image information in all directions (i.e., 360-degree image information) around the Z-axis can be obtained, whereas an object in one direction is detected in a conventional imaging apparatus using a single image sensor and a single lens. In addition, images in the two directions (i.e., ±Y directions) can be independently detected at the same time. Thus, the amount of information of the imaging apparatus is twice the amount of information of a conventional imaging apparatus, and therefore high speed imaging can be performed.

For example, the imaging apparatus can be set on a car as illustrated in FIG. 24 to obtain information on the periphery of the car. Specifically, the imaging apparatus includes the imaging apparatus 700, which is the imaging apparatus according to an embodiment and which is set on the top of the car 701, and the monitor 703, which is set on an instrument panel of the car 701. The image information on the periphery of the car, which is obtained by the imaging apparatus 700, is converted to image signals, and images of the periphery of the car are illustrated in the monitor 703. In addition, it is possible for the imaging apparatus to offer a caution if there is an obstruction in the vicinity of the car. Further, since the imaging apparatus can obtain 360-degree image information, it becomes possible to offer a caution to a driver of the car or to assist the driver by detecting 360-degree image information when the driver drives or parks the car, thereby making it possible for the driver to drive safety.

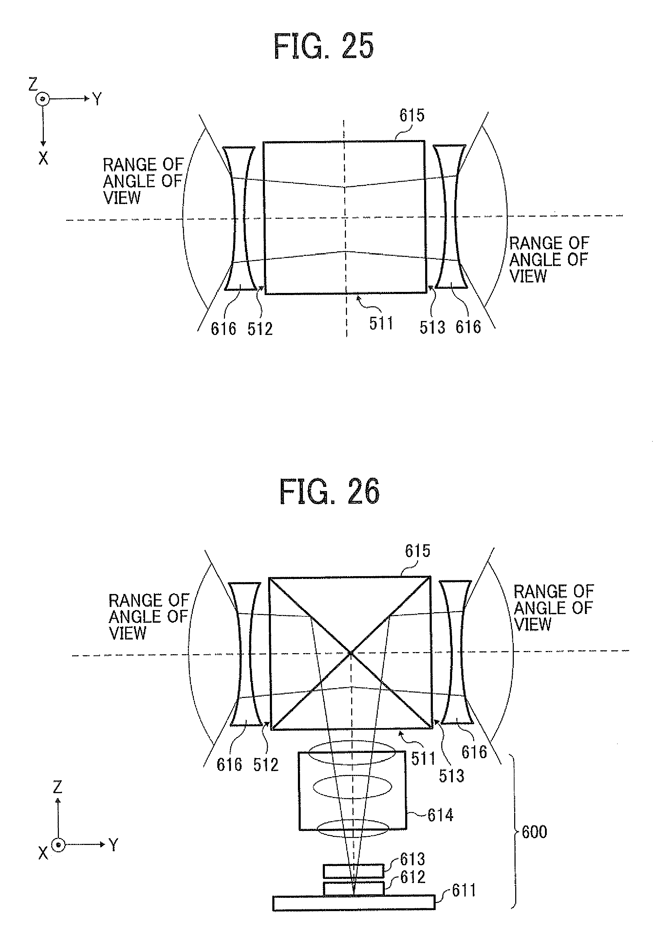

FIGS. 25 and 26 illustrate the construction of Example 3 of the imaging apparatus according to an embodiment.

As illustrated in FIG. 26, Example 3 of the imaging apparatus has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In addition, a lens 616 is arranged in the vicinity of each of the side surfaces 512 and 513 of the cross prism 615.

In this imaging apparatus, a region segmentation type polarization filter, which can extract P polarization information and S polarization information in a unit of pixel, is used for the optical filter 613. In addition, the cross prism 615, which is a polarization selection type cross prism, is set in front of the imaging lens 614. The polarization selection type cross prism 615 subjects a S polarization component of a light beam incident on the side surface 512 from the -Y direction and a P polarization component of a light beam incident on the side surface 513 from the +Y direction to polarization reflection so that the light beams travel toward the side surface 511. Thus, an image of the S polarization component of the light beam traveling from the -Y direction and another image of the P polarization component of the light beam traveling from the +Y direction can be extracted.

This imaging apparatus include the lenses 616 to widen the range of angle of view. In order to obtain a wide-angle of view, a concave lens is used for the lenses 616. When an optical system having a range of angle of view of not less than 180 degree is used for the imaging apparatus, image information in all directions (i.e., 360-degree image information) around the Z-axis can be obtained similarly to the imaging apparatus of Example 2. Since this imaging apparatus includes no rotating device unlike the imaging apparatus of Example 2, mechanical deterioration of the imaging apparatus due to vibration caused by a rotating device can be prevented, thereby making it possible to increase the life of the imaging apparatus. In addition, since 360-degree image information can be obtained at all times, 360-degree images can be obtained at a higher speed.

When an imaging apparatus has such construction as mentioned above, the imaging apparatus can obtain 360-degree image information around the Z-axis. In a conventional imaging apparatus using a single image sensor and a single lens, an object present in one direction is detected. In contrast, in this imaging apparatus, 360-degree image information around the Z-axis can be obtained.

For example, this imaging apparatus can be set on a car as illustrated in FIG. 24 to obtain information on the periphery of the car. Specifically, the imaging apparatus includes the imaging apparatus 700, which is the imaging apparatus according to an embodiment and which is set on the top of the car 701, and the monitor 703, which is set on an instrument panel of the car. The image information on the periphery of the car, which is obtained by the imaging apparatus 700, is converted to image signals, and images of the periphery of the car are illustrated in the monitor 703. In addition, it is possible for the imaging apparatus to offer a caution to a driver of the car if there is an obstruction in the vicinity of the car. Further, since the imaging apparatus can obtain 360-degree image information, it becomes possible to offer a caution to a driver of the car or to assist the driver by detecting 360-degree image information when the driver drives or parks the car, thereby making it possible to drive safety. This imaging apparatus has an advantage over the imaging apparatus of Example 2 such that a processing of converting moving (rotating) image information to periphery image information is not performed unlike the imaging apparatus of Example 2.

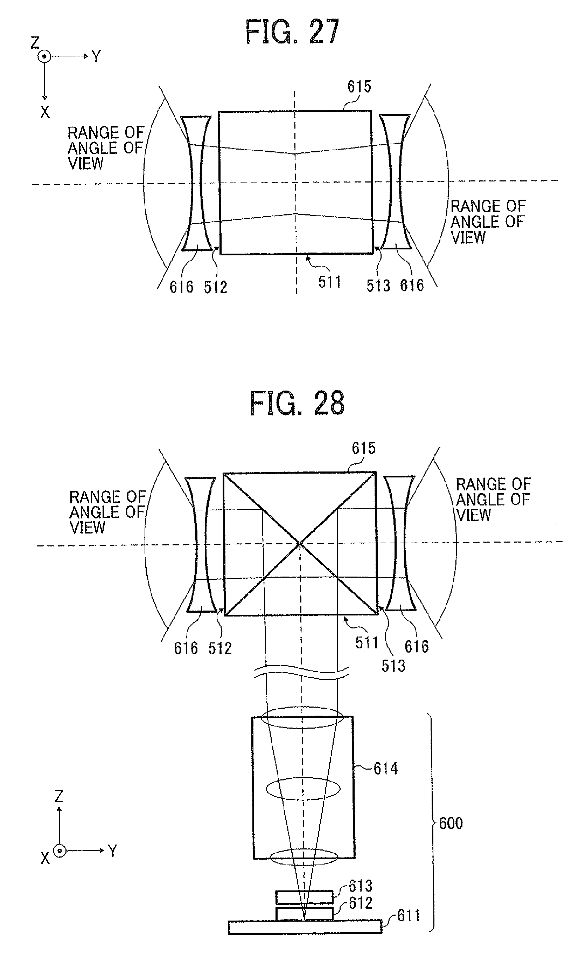

FIGS. 27 and 28 illustrate the construction of Example 4 of the imaging apparatus according to an embodiment.

As illustrated in FIG. 28, Example 4 of the imaging apparatus has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In addition, a lens 616 is arranged in the vicinity of each of the side surfaces 512 and 513 of the cross prism 615.

In this imaging apparatus, a region segmentation type polarization filter, which can extract P polarization information and S polarization information in a unit of pixel, is used for the optical filter 613. In addition, the cross prism 615, which is a polarization selection type cross prism, is set in front of the imaging lens 614. The polarization selection type cross prism 615 subjects a S polarization component of a light beam incident on the side surface 512 from the -Y direction and a P polarization component of a light beam incident on the side surface 513 from the +Y direction to polarization reflection so that the light beams travel toward the side surface 511. Thus, an image of the S polarization component of the light beam traveling from the -Y direction and another image of the P polarization component of the light beam traveling from the +Y direction can be extracted.

In this imaging apparatus, a known telecentric lens is used for the imaging lens 614. Telecentric lenses have a deep depth of field while having constant magnification in the range of the depth of field. Therefore, the distance between the lens 614 and the cross prism 615 can be increased so as to be longer than that in the imaging apparatus of Example 3, thereby making it possible to obtain images of objects in the +Y and -Y directions, which are apart from the lens 614, at the same time. In a conventional imaging apparatus using a single image sensor and a single telecentric lens, an object present in the Z direction is detected. In contrast, in this imaging apparatus, 360-degree image information around the Z-axis can be obtained.

Next, Example 5 of the imaging apparatus will be described.

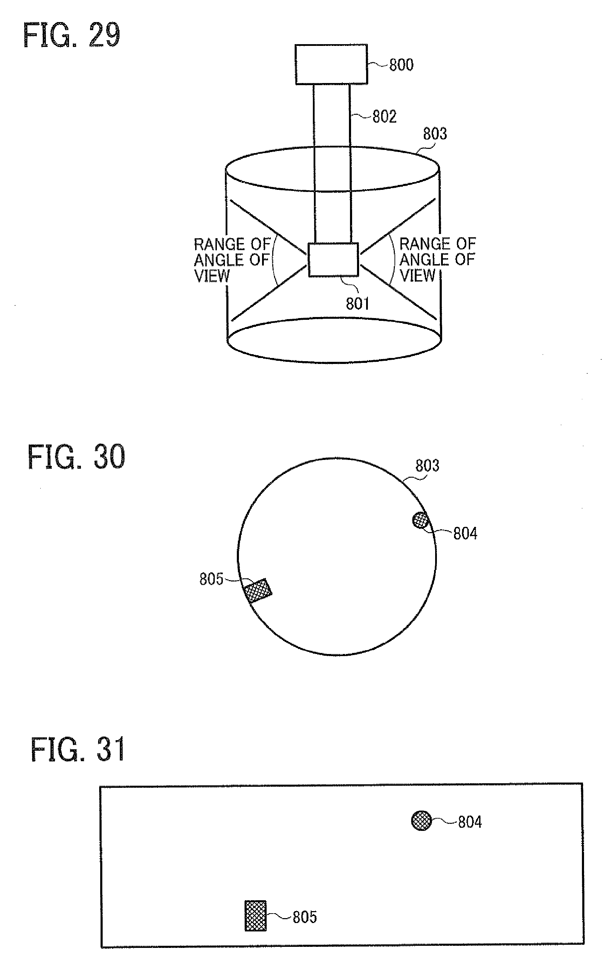

The imaging apparatus of Example 5 is used, for example, for defect inspection of checking whether the inner surface of a cylinder is damaged, and inspection of checking the surface condition of a coated layer. Referring to FIG. 29, an inspection apparatus 800 includes the above-mentioned imaging apparatus in which a cross prism 801 and an imaging lens portion (i.e., a portion of from the imaging lens to the substrate) are supported by a cylindrical chassis, and a monitor (not shown). When foreign materials 804 and 805 are adhered to the inner surface of a cylinder 803 to be inspected, such a 360-degree image as illustrated in FIG. 31 can be displayed in the monitor, thereby making it possible to determine that foreign materials are adhered to the inner surface of the cylinder while specifying the positions of the foreign materials on the inner surface. Thus, by using the imaging apparatus, information on the inside of a cylinder, such as information on defects which are hard to see from outside, can be obtained.

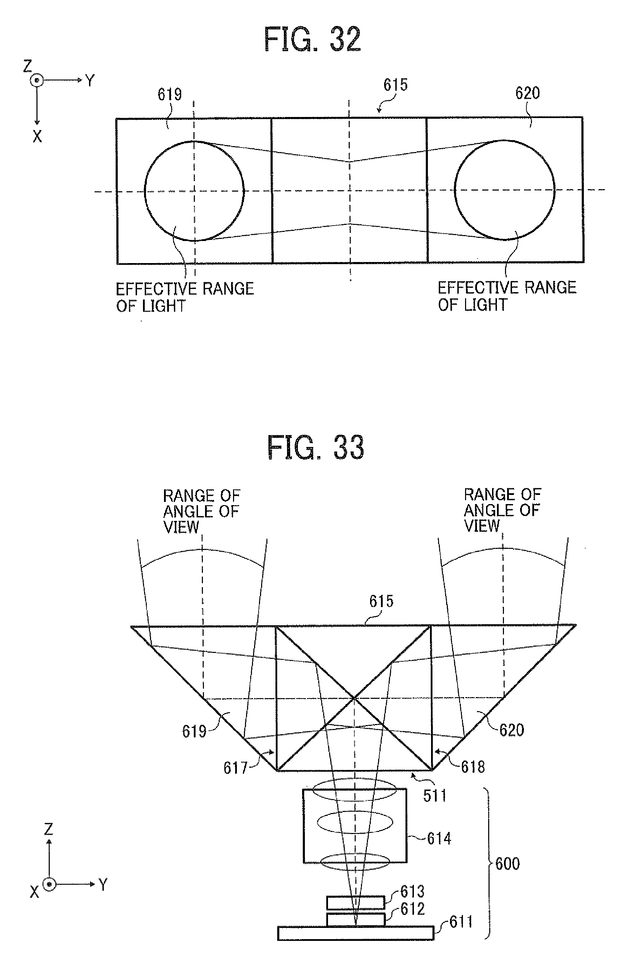

FIGS. 32 and 33 illustrate construction of Example 6 of the imaging apparatus. As illustrated in FIG. 33, the imaging apparatus of Example 6 has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In addition, triangle-pole prisms 619 and 620 are arranged in the vicinity of side surfaces 617 and 618 of the polarization selection type cross prism 615, respectively.

In this imaging apparatus, a region segmentation type polarization filter, which can extract P polarization information and S polarization information in a unit of pixel, is used for the optical filter 613. In addition, the cross prism 615, which is a polarization selection type cross prism, is set in front of the imaging lens 614, and two triangle-pole prisms 619 and 620 are arranged in the vicinity of the cross prism 615. Each of the triangle-pole prisms 619 and 620 has a total reflection surface which subjects light traveling from the +Z direction to polarization reflection in the Y axis direction. The polarization selection type cross prism 615 subjects a S polarization component of a light beam incident on the side surface 617 from the -Y direction and a P polarization component of a light beam incident on the side surface 618 from the +Y direction to polarization reflection so that the light beams travel toward the side surface 511. Thus, an image of the S polarization component of the light beam traveling from the -Y direction and another image of the P polarization component of a light beam traveling from the +Y direction can be extracted.

Unlike the imaging apparatus of Example 1, this imaging apparatus can obtain a P polarization image and a S polarization image in the Z direction at the same time. In addition, it can be easily understood from FIG. 33 that since there is a certain distance between the two ranges of angle of view, a parallax image can be formed by the imaging apparatus. Thus, this imaging apparatus is a stereo imaging apparatus which can obtain information on the distance between the imaging apparatus and an object to be imaged. This imaging apparatus has an advantage over conventional stereo imaging apparatus, in which two pairs of one image sensor and one lens are arranged in parallel, such that the apparatus needs one imaging lens and one image sensor, and therefore the costs thereof can be reduced. In addition, conventional stereo imaging apparatus have a drawback such that an error tends to occur when measuring the distance to an object due to variation of the base-line length caused by thermal expansion of the chassis. However, since this imaging apparatus has one imaging lens, such an error can be avoided.

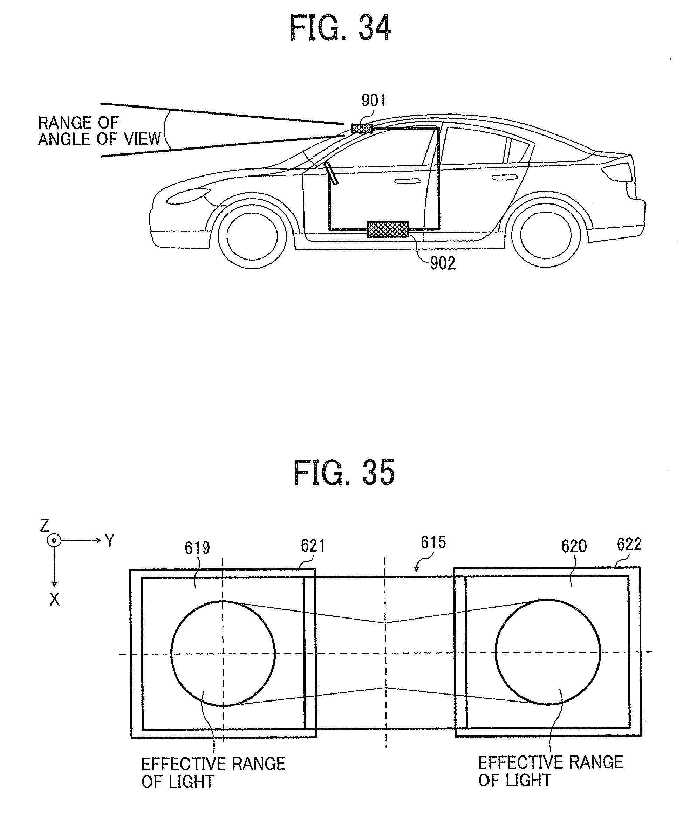

For example, by setting this imaging apparatus on a car as illustrated in FIG. 34, the imaging apparatus can be used as a forward viewing apparatus to obtain information on objects in front of the car. Specifically, the forward viewing apparatus includes an imaging apparatus 901, which is the imaging apparatus illustrated in FIG. 33 and which is arranged in the vicinity of a rearview mirror of the car, and a signal processor 902, which offers a caution to a driver or automatically controls the car according to the information sent from the imaging apparatus 901. Specific examples of the method for offering a caution to a driver include a method including notifying the driver of obstruction by voice using a speaker. Specific examples of the automatic car controlling method include a method including decelerating a car when there is obstruction in front of the car. Thus, by using this imaging apparatus, not only image information on objects (such as cars and pedestrians) in front of a car, but also information on the distance to the objects can be obtained. In addition, it is possible to rapidly offer a caution to a driver if there is obstruction in front of the car, thereby making it possible for the driver to drive safely.

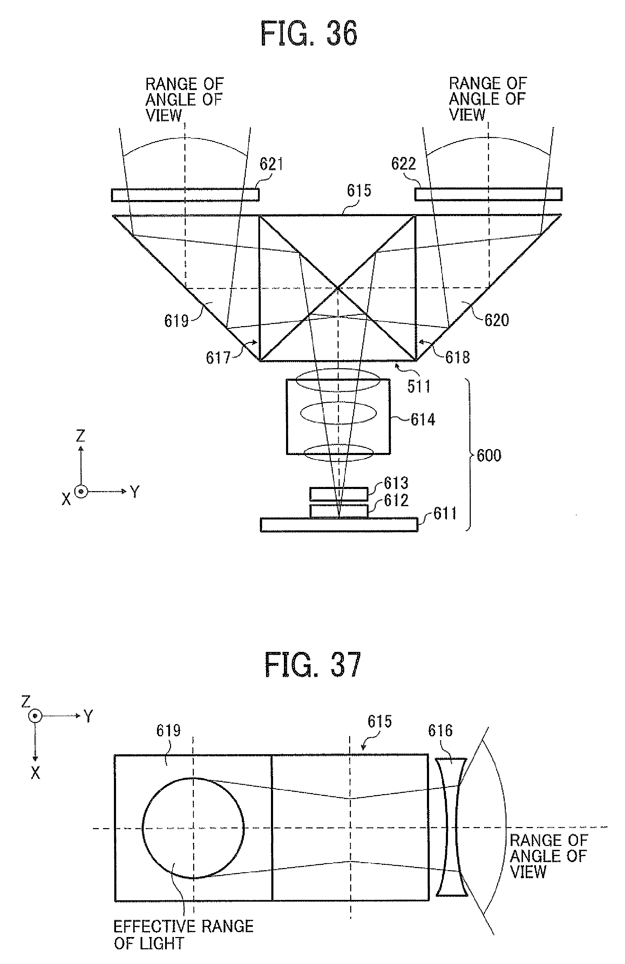

FIGS. 35 and 36 illustrate construction of Example 7 of the imaging apparatus. As illustrated in FIG. 36, the imaging apparatus of Example 7 has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In addition, the triangle-pole prisms 619 and 620 are arranged in the vicinity of the side surfaces 617 and 618 of the polarization selection type cross prism 615, respectively. Further, optical filters 621 and 622 having different optical properties are set in front of the triangle-pole prisms 619 and 620, respectively.

In this imaging apparatus, a region segmentation type polarization filter, which can extract P polarization information and S polarization information in a unit of pixel, is used for the optical filter 613. In addition, the cross prism 615, which is a polarization selection type cross prism, is set in front of the imaging lens 614, and two triangle-pole prisms 619 and 620 are arranged in the vicinity of the cross prism 615. Each of the triangle-pole prisms 619 and 620 has a total reflection surface which subjects light from the +Z direction to polarization reflection in the Y axis direction. The polarization selection type cross prism 615 subjects a S polarization component of a light beam incident on the side surface 617 from the -Y direction and a P polarization component of a light beam incident on the side surface 618 from the +Y direction to polarization reflection so that the light beams travel toward the side surface 511. Thus, an image of the S polarization component of the light beam from the -Y direction and another image of the P polarization component of the light beam from the +Y direction can be extracted.

Unlike the imaging apparatus of Example 1, this imaging apparatus can obtain a P polarization image and a S polarization image in the Z direction at the same time. In addition, the P polarization image and the S polarization image can be obtained through the optical filters 621 and 622. For example, by using an infrared (IR) cut filter for the optical filter 621 while using an IR bandpass filter transmitting only infrared rays for the optical filter 622, two kinds of images of an object taken by using light beams in different wavelength ranges can be obtained at the same time. The IR cut filter transmits light having a wavelength of from 450nm to 700nm, and the IR bandpass filter transmits light having a wavelength of from 850nm to 1000nm. In a conventional imaging apparatus using a single image sensor and a single lens, one kind of image of an object in the Z direction can be obtained. In contrast, in this imaging apparatus, two kinds of images of an object in the Z direction can be obtained independently at the same time.

For example, by setting this imaging apparatus on a car as illustrated in FIG. 34, the imaging apparatus can be used as a forward viewing apparatus to obtain information on objects in front of the car. Specifically, the forward viewing apparatus includes an imaging apparatus 901, which is the imaging apparatus illustrated in FIG. 36 and which is arranged in the vicinity of a rearview mirror of a car, and a signal processor 902. The forward viewing apparatus can obtain information on objects (such as cars and pedestrians) in front of the car. When there is obstruction in front of the car, the forward viewing apparatus can rapidly notify the driver of the obstruction, thereby making it possible for the driver to drive safely. Since this forward viewing apparatus can obtain an IR cut image, it becomes possible to detect an obstruction in the daytime while eliminating an unnecessary image obtained by infrared rays. In addition, when a light emitting diode (LED) lamp emitting near-infrared rays is used for the headlights of the car, it becomes possible to image an obstruction at night.

In the imaging apparatus of Example 7, lenses having different depths of field can be set instead of the optical filters 621 and 622. By using such lenses, for example, a short-distance image, and a long-distance image can be obtained at the same time.

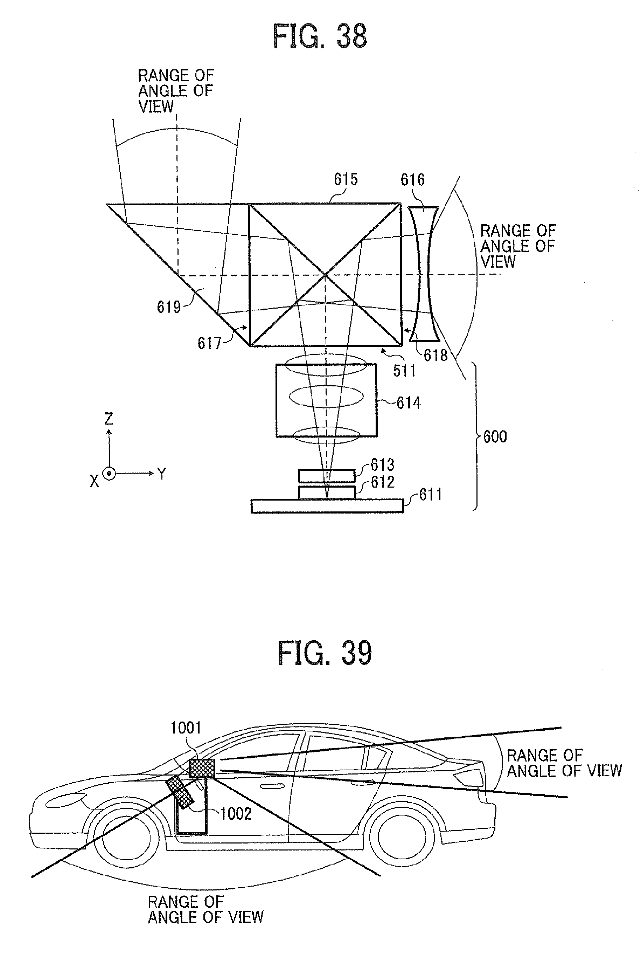

FIGS. 37 and 38 illustrate construction of Example 8 of the imaging apparatus according to an example. As illustrated in FIG. 38, the imaging apparatus of Example 8 has construction such that the image sensor 612 is arranged on the substrate 611, and the optical filter 613 is set on the image sensor 612 so as to be contacted with the image sensor. The imaging apparatus images an object via the imaging lens 614. The polarization selection type cross prism 615 is set in front of the lens 614. In addition, a lens 616 is arranged in the vicinity of the side surface 618 of the polarization selection type cross prism 615. Further, a triangle-pole prism 619 is arranged so as to be close to the side surface 617 of the polarization selection type cross prism 615.

In this imaging apparatus, a region segmentation type polarization filter, which can extract P polarization information and S polarization information in a unit of pixel, is used for the optical filter 613. In addition, the cross prism 615, which is a polarization selection type cross prism, is set in front of the imaging lens 614. The polarization selection type cross prism 615 subjects a S polarization component of a light beam incident on the side surface 617 from the +Z direction to polarization reflection so that the S polarization component travels toward the side surface 511 (i.e., in the -Z direction). In addition, the cross prism 615 subjects a P polarization component of a light beam incident on the side surface 618 from the +Y direction to polarization reflection so that the P polarization component travels toward the side surface 511 (i.e., in the -Z direction). Thus, an image of the S polarization component of the light beam traveling from the +Z direction and another image of the P polarization component of the light beam traveling from the +Y direction can be extracted.

Unlike the imaging apparatus of Example 1, the imaging apparatus of Example 8 can obtain an image of an object in the Z direction using the triangle-pole prism 619 while obtaining an image of an object in the +Y direction using the lens 616 whose angle of field is widened. In a conventional imaging apparatus using a single image sensor and a single lens, an object present in the Z direction is detected. In contrast, in this imaging apparatus, an object present in the +Z direction and another object present in the +Y direction can be imaged. Thus, images in two different directions can be independently obtained at the same time.

For example, by setting this imaging apparatus on a car as illustrated in FIG. 39, information on a rearward object and information on an object on the left side of the car can be obtained by the imaging apparatus. Specifically, this rearward and left-side viewing apparatus includes an imaging apparatus 1001, which is the above-mentioned imaging apparatus and which is arranged in the vicinity of a side mirror of the car, and a monitor 1002 set on a portion of an instrument panel close to the driver seat of the car. By using this rearward and left-side viewing apparatus, information on rearward objects such as following cars and objects on the left side of the car such as cars and ditches beside the car can be obtained. Thus, the driver can obtain images of objects which are hard to see for the driver, thereby making it possible for the driver to drive safety.

The above-described polarization devices and the imaging apparatuses are examples of the polarization device.

The specific effects of specific examples not falling under the scope of the invention as defined by the appended claims are the following.

### (Embodiment 1)

In a polarization device which separates an incident light beam into light beams having different polarization components, the polarization device includes a first polarization plate and a second polarization plate. The first polarization plate includes a first polarizer layer which reflects a first polarization component included in the incident light beam and having a first polarization direction while transmitting a second polarization component included in the incident light beam and having a second polarization direction perpendicular to the first polarization direction. The second polarization plate includes a second polarizer layer which transmits the first polarization component of the incident light beam while reflecting the second polarization component of the incident light beam. The surface of the first polarization plate bearing the first polarization layer and the surface of the second polarization plate bearing the second polarization layer are arranged so as to intersect with each other at a predetermined angle.

In this regard, a polarization plate having a polarization plane on which a polarizer layer is formed is used for the polarization device as mentioned above. This polarizer layer has a property such that the polarizer layer reflects a specific polarization component included in incident light and having a specific direction, and transmits a polarization component included in incident light and having another polarization direction perpendicular to the specific polarization direction. When two polarizer layers having polarization components perpendicular to each other are used, a polarization component having the specific polarization direction is reflected by one of the two polarizer layers while passing through the other polarizer layer. Such polarizer layers are formed on the polarization plane to prepare the polarization plates. This polarization device includes at least the first and second polarization plates. The first and second polarization plates are arranged so as to intersect with each other at a predetermined angle in such a manner that the polarization plane of the first polarization plate is perpendicular to the polarization plane of the second polarization plate. The light beam reflected by the first polarization plate is incident on the second polarization plate, and the light beam reflected by the second polarization plate is incident on the first polarization plate. Therefore, it becomes possible to separate an incident light beam into a light beam having a first polarization component and another light beam having a second polarization component having a polarization direction perpendicular to the polarization direction of the first polarization component. In addition, it becomes possible to synthesize (combine) a light beam having a first polarization component and a light beam having a second polarization component having a polarization direction perpendicular to the polarization direction of the first polarization component.

### (Embodiment 2)

In Embodiment 1 mentioned above, a triangle-pole prism is set in at least one of the four spaces formed by the first and second polarization plates. In this case, as mentioned above by reference to the first modified example of the cross prism, the plate aberration of the polarization plate can be decreased.

### (Embodiment 3)

In Embodiment 2 mentioned above, two triangle-pole prisms are respectively set in two opposed spaces of the four spaces formed by the first and second polarization plates. In addition, a triangle-pole prism is set so as to be close to or contacted with the side surface of at least one of the two triangle-pole prisms, which surface is not opposed to the first or second polarization plate. In this case, as mentioned above by reference to the second modified example of the cross prism, the plate aberration of the polarization plate can be decreased.

### (Embodiment 4)

In Embodiment 2 mentioned above, a quadrangle-pole prism is set in one of the four spaces so as to be opposed to the triangle-pole prism. In this case, as mentioned above by reference to the third modified example of the cross prism, the plate aberration of the polarization plate can be decreased.

### (Embodiment 5)

In a polarization device which separates an incident light beam into light beams having different polarization components, the polarization device includes a first polarization plate, a second polarization plate, a first reflection member, and a second reflection member. The first polarization plate includes a first polarizer layer which reflects a first polarization component included in an incident light beam and having a polarization direction while transmitting a second polarization component included in the incident light beam and having another polarization direction, wherein the polarization directions of the first and second polarization components are perpendicular to each other. The second polarization plate includes a second polarizer layer which transmits the first polarization component included in the incident light beam while reflecting the second polarization component of the incident light beam. The surface of the first polarization plate bearing the first polarization layer and the surface of the second polarization plate bearing the second polarization layer are arranged at a predetermined angle. The first polarization plate and the first reflection member are arranged linearly, and the second polarization plate and the second reflection member are arranged linearly. By using this polarization device, it becomes possible to separate an incident light beam into a light beam having a first polarization component and a light beam having a second polarization component having a polarization direction perpendicular to the polarization direction of the first polarization component. In addition, it becomes possible to synthesize (combine) a light beam including a first polarization component and a light beam including a second polarization component having a polarization direction perpendicular to the polarization direction of the first polarization component.

### (Embodiment 6)

In any one of Embodiments 1-5, the first and second polarizer layers have a wire grid structure such that a metal wire extending in a specific direction is arranged side by side with a predetermined distance. Polarizer layers having such a wire grid structure can reflect or transmit light of different polarization components having different polarization directions perpendicular to each other. When an incident light beam is separated into different polarization components having different polarization directions perpendicular to each other, a first polarization component of a light beam incident on the polarization plane of the first polarization plate 101 is reflected by the polarization plane, and the reflected light passes through the polarization plane of the second polarization plate 102. A second polarization component of the light beam incident on the polarization plane of the first polarization plate 101 passes through the first polarization plate 101. In contrast, first polarization component of the light beam incident on the polarization plane of the second polarization plate 102 passes through the second polarization plate 102. Second polarization component of the light beam incident on the polarization plane of the second polarization plate 102 is reflected by the polarization plane, and the reflected light beam passes through the polarization plane of the first polarization plate 101. For example, when light beams having different polarization components having different directions perpendicular to each other are synthesized (combined), light paths opposite to the light paths 1-4, which are mentioned above and which are used for separating a light beam into light beams having different polarization components perpendicular to each other, are used.

### (Embodiment 7)

In this Embodiment, the predetermined angle mentioned above in Embodiment 1 is 90 degree. By using this polarization device, light having a specific polarization component can be synthesized.

### (Embodiment 8)

Embodiment 8 is an imaging apparatus, which includes any one of the polarization devices of Embodiments 1-7, and an imaging device to form an image using light polarized by the polarization device. As mentioned above by reference to examples of the imaging device, the imaging apparatus can be used as an imaging apparatus which can subject a P polarization component of a light beam and a S polarization component of a light beam to light path synthesis.

### (Embodiment 9)

In the imaging apparatus of Embodiment 8, light beams traveling from different directions are focused on the imaging device via the polarization device. According to Embodiment 9, images of objects present in different directions can be independently obtained at the same time as mentioned above by reference to Example 1 of the imaging apparatus.

### (Embodiment 10)

In the imaging apparatus of Embodiment 9, light beams traveling from opposite directions are focused on the imaging device via the polarization device. According to Embodiment 10, images of objects present in opposite (left-hand and right-hand) directions can be independently obtained at the same time as mentioned above by reference to Example 1 of the imaging apparatus.

### (Embodiment 11)

In any one of the imaging apparatus of Embodiments 8-10, a lens is arranged in the imaging apparatus to widen the range of angle of view. By using such a lens, the range of angle of view can be widened without rotating the optical system (polarization device) (i.e., without using a rotating mechanism), thereby decreasing costs of the imaging apparatus.

### (Embodiment 12)

In the imaging apparatus of Embodiment 8, light beams traveling from the same direction are focused on the imaging device via the polarization device to form images in the imaging device, and a parallax image is obtained based on the images. As mentioned above by reference to Example 6 of the imaging apparatus, this imaging apparatus serves as a stereo imaging apparatus, which has low costs because of having one optical system.

### (Embodiment 13)

In any one of the imaging apparatus of Embodiments 8-12, incident light is focused on the imaging device via optical filters having different transparent wavelengths. As mentioned above by reference to Example 7 of the imaging apparatus, by using this imaging apparatus, two kinds of images of an object can be obtained utilizing the different wavelengths of different components of

## Claims

1. An imaging apparatus (700, 703; 800, 901, 902; 1001, 1002) including a lens (614) and a rotatable polarization selection type cross prism (615) set in front of the lens (614) to polarize light, the cross prism (615) comprising:
four triangle-pole prisms (1, 2, 3, 4), a first polarization plate (101, 104; 201, 202; 5, 7) and a second polarization plate (102, 103; 204, 204; 6, 8), wherein the triangle-pole prisms (1, 2, 3, 4) are arranged such that the tops (14, 24, 34, 44) of the four triangle-pole prisms (1, 2, 3, 4) face each other;
the first polarization plate (101, 104; 201, 202; 5; 7) bearing a first polarizer layer (101-1; 52; 72) including a first reflection member (104), wherein the first polarizer layer reflects a first polarization component included in an incident light beam and having a first polarization direction while transmitting a second polarization component included in the incident light beam and having a second polarization direction perpendicular to the first polarization direction; and
the second polarization plate (102, 103; 203, 204; 6; 8) bearing a second polarizer layer (102-1; 62; 82) including a second reflection member (103), wherein the second polarizer layer transmits the first polarization component included in the incident light beam while reflecting the second polarization component included in the incident light beam,
wherein the first polarization plate and the second polarization plate intersect with each other at a predetermined angle to form four spaces, and the first polarizer layer and the second polarizer layer are disposed at substantially a right angle relative to each other so that they form at least one of the four spaces, the imaging apparatus further comprising:
an optical system (600) comprising the lens (614) and a substrate (611) and an image sensor (612) arranged on the substrate (611), the cross prism (615) being rotatable about the optical axis of the lens (614) and the image sensor (612),
the optical system (600) further comprising an optical filter (613) arranged on the image sensor (612), the optical filter (613) being configured to extract the first polarization component and the second polarization component in a unit of pixel in order to obtain an image of the first polarization component and an image of the second polarization component at the same time, wherein the optical system (600) from the substrate (611) to the lens (614) is fixed,
**characterized in that**
the cross prism (615) polarizes light beams traveling from opposite directions, and transmits the polarized light beams to the optical system (600) so that the optical system (600) forms images using the polarized light beams,
wherein the cross prism (615) subjects the first polarization component incident on a first side surface (512) of the cross prism (615) from a first direction and the second polarization component incident from a second direction opposite to the first direction on a second side surface (513) of the cross prism (615) to polarization reflection so that the light beam travels towards a third side surface (511) of the cross prism (615).

2. The imaging apparatus according to Claim 1, including at least three triangle-pole prisms (1; 2; 3; 4), wherein two of the at least three triangle-pole prisms are respectively located in two opposed spaces of the four spaces formed by the first polarization plate (101, 104; 201, 202; 5; 7) and the second polarization plate (102, 103; 203, 204; 6; 8), and one of the at least three triangle-pole prisms is located so as to be close to or contacted with a side surface of at least one of the two opposed triangle-pole prisms, said side surface not being opposed to the first polarization plate and the second polarization plate.

3. The imaging apparatus according to Claim 1, further comprising:
a quadrangle-pole prism (410; 420; 410-2; 420-2) located in at least one of two opposed spaces of the four spaces.

4. The imaging apparatus according to Claim 1, wherein the first reflection member and the second reflection member face each other to form another one of the four spaces.

5. The imaging apparatus according to Claim 4, further comprising:
at least one triangle-pole prism (1; 2; 3; 4) located in one of the four spaces formed by the first polarization plate and the second polarization plate intersecting with each other.

6. The imaging apparatus according to Claim 4, further comprising:
a quadrangle-pole prism (410; 420; 410-2; 420-2) located in at least one of two opposed spaces of the four spaces.

7. The imaging apparatus according to any one of Claims 1 to 6, wherein each of the first polarizer layer (101-1; 52; 72) and the second polarizer layer (102-1; 62; 82) has a wire grid structure such that a metal wire extending in a specif direction is arranged side by side with a predetermined distance.

8. The imaging apparatus according to any one of Claims 1 to 7, wherein the predetermined angle is 90 degree.

9. The imaging apparatus according to any one of the preceding claims,
wherein the optical system (600) serves as an imaging device (703; 802; 902; 1002) to form an image using light polarized by the polarization device.

10. The imaging apparatus (700, 703; 800; 901, 902; 1001, 1002) according to claim 9, further comprising:
a lens (616) to widen angle of view of light incident on the polarization device (100; 200; 10; 10-2; 10-3; 10-4; 615; 801).

11. The imaging apparatus (700, 703; 800; 901, 902; 1001, 1002) according to any one of claims 9 to 10, further comprising:
optical filters (621, 622) having different transparent wavelengths,
wherein the polarization device (100; 200; 10; 10-2; 10-3; 10-4; 615; 801) receives an incident light beam via the optical filters, and transmits the polarized light beams to the imaging device (600; 703; 802; 902; 1002) so that the imaging device forms images using the filtered and polarized light beams.

## Patentansprüche

1. Bildgebungsvorrichtung (700, 703; 800, 901, 902; 1001, 1002), die eine Linse (614) und ein drehbares Kreuzprisma eines Polarisationsauswahltyps (615), das vor der Linse eingerichtet ist, um Licht zu polarisieren, enthält, wobei das Kreuzprisma (615) umfasst:
vier Dreieckpolprismen (1, 2, 3, 4), eine erste Polarisationsplatte (101, 104; 201, 202; 5, 7) und eine zweite Polarisationsplatte (102, 103; 204, 204; 6, 8), wobei die Dreieckpolprismen (1, 2, 3, 4) derart angeordnet sind, dass die oberen Seiten (14, 24, 34, 44) der vier Dreieckpolprismen (1, 2, 3, 4) einander zugewandt sind;
wobei die erste Polarisationsplatte (101, 104; 201, 202; 5; 7) eine erste Polarisatorschicht (101-1; 52; 72) trägt, die ein erstes Reflexionselement (104) enthält, wobei die erste Polarisatorschicht eine erste Polarisationskomponente reflektiert, die in einem einfallenden Lichtstrahl enthalten ist und eine erste Polarisationsrichtung besitzt, während eine zweite Polarisationskomponente, die in dem einfallenden Lichtstrahl enthalten ist und eine zweite Polarisationsrichtung senkrecht zu der ersten Polarisationsrichtung besitzt, durchgelassen wird; und
wobei die zweite Polarisationsplatte (102, 103; 203, 204; 6; 8) eine zweite Polarisatorschicht (102-1; 62; 82) trägt, die ein zweites Reflexionselement (103) enthält, wobei die zweite Polarisatorschicht die erste Polarisationskomponente, die in dem einfallenden Lichtstrahl enthalten ist, durchlässt, während die zweite Polarisationskomponente, die in dem einfallenden Lichtstrahl enthalten ist, reflektiert wird,
wobei die erste Polarisationsplatte und die zweite Polarisationsplatte einander in einem vorgegebenen Winkel schneiden, um vier Räume zu bilden, und die erste Polarisatorschicht und die zweite Polarisatorschicht im Wesentlichen in einem rechten Winkel zueinander angeordnet sind, so dass sie mindestens einen der vier Räume bilden, wobei die Bildgebungsvorrichtung ferner umfasst:
ein optisches System (600), das die Linse (614) und ein Substrat (611) und einen Bildsensor (612), der auf dem Substrat (611) angeordnet ist, umfasst, wobei das Kreuzprisma (615) um die optische Achse der Linse (614) und den Bildsensor drehbar ist,
wobei das optische System (600) ferner ein optisches Filter (613) umfasst, das auf dem Bildsensor (612) angeordnet ist, wobei das optische Filter (613) konfiguriert ist, die erste Polarisationskomponente und die zweite Polarisationskomponente in einer Einheit von Pixel zu extrahieren, um ein Bild der ersten Polarisationskomponente und ein Bild der zweiten Polarisationskomponente zur selben Zeit zu erhalten, wobei das optische System (600) von dem Substrat (611) zu der Linse (614) festgelegt ist,
**dadurch gekennzeichnet, dass**
das Kreuzprisma (615) Lichtstrahlen, die aus entgegengesetzten Richtungen laufen, polarisiert, und die polarisierten Lichtstrahlen an das optische System (600) überträgt, so dass das optische System (600) Bilder unter Verwendung der polarisierten Lichtstrahlen bildet,
wobei das Kreuzprisma (615) die erste Polarisationskomponente, die aus einer ersten Richtung auf eine erste Seitenfläche (512) des Kreuzprismas (615) einfällt, und die zweite Polarisationskomponente, die aus einer zweiten Richtung entgegengesetzt zu der ersten Richtung auf eine zweite Seitenfläche (513) des Kreuzprismas (615) einfällt, einer Polarisationsreflexion unterzieht, so dass der Lichtstrahl in Richtung einer dritten Seitenfläche (511) des Kreuzprismas (615) läuft.

2. Bildgebungsvorrichtung nach Anspruch 1, die mindestens drei Dreieckpolprismen (1; 2; 3; 4) enthält, wobei zwei der mindestens drei Dreieckpolprismen jeweils in zwei gegenüberliegenden Räumen der vier durch die erste Polarisationsplatte (101, 104; 201, 202; 5; 7) und die zweite Polarisationsplatte (102, 103; 203; 204; 6; 8) gebildeten vier Räume vorhanden sind und eines der mindestens drei Dreieckpolprismen so vorhanden ist, dass es sich in der Nähe einer Seitenfläche mindestens eines der beiden gegenüberliegenden Dreieckpolprismen oder in Kontakt mit ihr befindet, wobei die Seitenfläche der ersten Polarisationsplatte und der zweiten Polarisationsplatte nicht gegenüberliegt.

3. Bildgebungsvorrichtung nach Anspruch 1, die ferner umfasst:
ein Viereckpolprisma (410; 420; 410-2; 420-2), das sich in mindestens einem der beiden gegenüberliegenden Räume der vier Räume befindet.

4. Bildgebungsvorrichtung nach Anspruch 1, wobei das erste Reflexionselement und das zweite Reflexionselement einander zugewandt sind, um einen weiteren der vier Räume zu bilden.

5. Bildgebungsvorrichtung nach Anspruch 4, die ferner umfasst:
mindestens ein Dreieckpolprisma (1; 2; 3; 4), das sich in einem der vier Räume befindet, die durch die erste Polarisationsplatte und die zweite Polarisationsplatte, die einander schneiden, gebildet sind.

6. Bildgebungsvorrichtung nach Anspruch 4, die ferner umfasst:
ein Viereckpolprisma (410; 420; 410-2; 420-2), das sich in mindestens einem von zwei gegenüberliegenden Räumen der vier Räume befindet.

7. Bildgebungsvorrichtung nach einem der Ansprüche 1 bis 6, wobei die erste Polarisatorschicht (101-1; 52: 72) und die zweite Polarisatorschicht (102-1; 62; 82) eine Drahtgitterstruktur besitzen, derart, dass ein Metalldraht, der sich in einer bestimmten Richtung erstreckt, nebeneinander in einem vorgegebenen Abstand angeordnet ist.

8. Bildgebungsvorrichtung nach einem der Ansprüche 1 bis 7, wobei der vorgegebene Winkel 90 Grad beträgt.

9. Bildgebungsvorrichtung nach einem der vorhergehenden Ansprüche,
wobei das optische System (600) als eine Bildgebungsvorrichtung (703; 802; 902; 1002) dient, um ein Bild unter Verwendung von durch die Polarisationsvorrichtung polarisiertem Licht zu erzeugen.

10. Bildgebungsvorrichtung (700, 703; 800; 901, 902; 1001, 1002) nach Anspruch 9, die ferner umfasst:
eine Linse (616), um einen Sichtwinkel von auf der Polarisationsvorrichtung (100; 200; 10; 10-2; 10-3; 10-4; 615; 801) einfallendem Licht zu erweitern.

11. Bildgebungsvorrichtung (700, 703; 800; 901, 902; 1001, 1002) nach einem der Ansprüche 9 bis 10, die ferner umfasst:
optische Filter (621, 622) mit verschiedenen Durchlasswellenlängen,
wobei die Polarisationsvorrichtung (100; 200; 10; 10-2; 10-3; 10-4; 615; 801) einen einfallenden Lichtstrahl über die optischen Filter empfängt und die polarisierten Lichtstrahlen an die Bildgebungsvorrichtung (600; 703; 802; 902; 1002) überträgt, so dass die Bildgebungsvorrichtung Bilder unter Verwendung der gefilterten und polarisierten Lichtstrahlen erzeugt.

## Revendications

1. Appareil de formation d'image (700, 703 ; 800, 901, 902 ; 1001, 1002) comprenant une lentille (614) et un prisme en croix du type à sélection de polarisation rotatif (615) placé à l'avant de la lentille (614) pour polariser la lumière, le prisme en croix (615) comprenant :
quatre prismes triangulaires (1, 2, 3, 4), une première plaque de polarisation (101, 104 ; 201, 202 ; 5, 7) et une deuxième plaque de polarisation (102, 103 ; 203, 204 ; 6, 8), dans lequel les prismes triangulaires (1, 2, 3, 4) sont agencés de sorte que les sommets (14, 24, 34, 44) des quatre prismes triangulaires (1, 2, 3, 4) se fassent mutuellement face ;
la première plaque de polarisation (101, 104 ; 201, 202 ; 5 ; 7) portant une première couche de polariseur (101-1 ; 52 ; 72) comprenant un premier élément de réflexion (104), dans lequel la première couche de polariseur réfléchit une première composante de polarisation incluse dans un faisceau de lumière incident et ayant une première direction de polarisation tandis qu'elle transmet une deuxième composante de polarisation incluse dans le faisceau de lumière incident et ayant une deuxième direction de polarisation perpendiculaire à la première direction de polarisation ; et
la deuxième plaque de polarisation (102, 103 ; 203, 204 ; 6 ; 8) portant une deuxième couche de polariseur (102-1 ; 62 ; 82) comprenant un deuxième élément de réflexion (103), dans lequel la deuxième couche de polariseur transmet la première composante de polarisation incluse dans le faisceau de lumière incident tandis qu'elle réfléchit la deuxième composante de polarisation incluse dans le faisceau de lumière incident,
dans lequel la première plaque de polarisation et la deuxième plaque de polarisation se croisent selon un angle prédéterminé pour former quatre espaces, et la première couche de polariseur et la deuxième couche de polariseur sont disposées sensiblement à angle droit l'une par rapport à l'autre de sorte qu'elles forment au moins l'un des quatre espaces, l'appareil de formation d'image comprenant en outre :
un système optique (600) comprenant la lentille (614) et un substrat (611) et un capteur d'image (612) agencé sur le substrat (611), le prisme en croix (615) pouvant tourner autour de l'axe optique de la lentille (614) et du capteur d'image (612),
le système optique (600) comprenant en outre un filtre optique (613) agencé sur le capteur d'image (612), le filtre optique (613) étant configuré pour extraire la première composante de polarisation et la deuxième composante de polarisation dans une unité de pixel afin d'obtenir une image de la première composante de polarisation et une image de la deuxième composante de polarisation simultanément, dans lequel le système optique (600) du substrat (611) à la lentille (614) est fixe,
**caractérisé en ce que**
le prisme en croix (615) polarise les faisceaux de lumière se propageant à partir de directions opposées, et transmet les faisceaux de lumière polarisés au système optique (600) de sorte que le système optique (600) forme des images en utilisant les faisceaux de lumière polarisés,
dans lequel le prisme en croix (615) soumet la première composante de polarisation frappant une première surface latérale (512) du prisme en croix (615) dans une première direction et la deuxième composante de polarisation frappant dans une deuxième direction opposée à la première direction une deuxième surface latérale (513) du prisme en croix (615) à une réflexion de polarisation de sorte que le faisceau de lumière se propage vers une troisième surface latérale (511) du prisme en croix (615).

2. Appareil de formation d'image selon la revendication 1, comprenant au moins trois prismes triangulaires (1 ; 2 ; 3 ; 4), dans lequel deux desdits au moins trois prismes triangulaires sont respectivement situés dans deux espaces opposés des quatre espaces formés par la première plaque de polarisation (101, 104 ; 201, 202 ; 5 ; 7) et la deuxième plaque de polarisation (102, 103 ; 203, 204 ; 6 ; 8), et l'un desdits au moins trois prismes triangulaires est situé de manière à être à proximité d'une ou en contact avec une surface latérale d'au moins l'un des deux prismes triangulaires opposés, ladite surface latérale n'étant pas face à la première plaque de polarisation et à la deuxième plaque de polarisation.

3. Appareil de formation d'image selon la revendication 1, comprenant en outre :
un prisme quadrangulaire (410 ; 420 ; 410-2 ; 420-2) situé dans au moins l'un de deux espaces opposés des quatre espaces.

4. Appareil de formation d'image selon la revendication 1, dans lequel le premier élément de réflexion et le deuxième élément de réflexion se font mutuellement face pour former un autre des quatre espaces.

5. Appareil de formation d'image selon la revendication 4, comprenant en outre :
au moins un prisme triangulaire (1 ; 2 ; 3 ; 4) situé dans l'un des quatre espaces formés par la première plaque de polarisation et la deuxième plaque de polarisation qui se croisent.

6. Appareil de formation d'image selon la revendication 4, comprenant en outre :
un prisme quadrangulaire (410 ; 420 ; 410-2 ; 420-2) situé dans au moins l'un de deux espaces opposés des quatre espaces.

7. Appareil de formation d'image selon l'une quelconque des revendications 1 à 6, dans lequel chacune de la première couche de polariseur (101-1 ; 52 ; 72) et de la deuxième couche de polariseur (102-1 ; 62 ; 82) a une structure de grille de fils telle que des fils métalliques s'étendant dans une direction spécifique sont agencés côte à côte avec une distance prédéterminée.

8. Appareil de formation d'image selon l'une quelconque des revendications 1 à 7, dans lequel l'angle prédéterminé est de 90 degrés.

9. Appareil de formation d'image selon l'une quelconque des revendications précédentes,
dans lequel le système optique (600) sert de dispositif de formation d'image (703 ; 802 ; 902 ; 1002) pour former une image en utilisant la lumière polarisée par le dispositif de polarisation.

10. Appareil de formation d'image (700, 703 ; 800 ; 901, 902 ; 1001, 1002) selon la revendication 9, comprenant en outre :
une lentille (616) pour agrandir un angle de vision de la lumière frappant le dispositif de polarisation (100 ; 200 ; 10 ; 10-2 ; 10-3 ; 10-4 ; 615 ; 801).

11. Appareil de formation d'image (700, 703 ; 800 ; 901, 902 ; 1001, 1002) selon l'une quelconque des revendications 9 à 10, comprenant en outre :
des filtres optiques (621, 622) ayant différentes longueurs d'onde transparentes,
dans lequel le dispositif de polarisation (100 ; 200 ; 10 ; 10-2 ; 10-3 ; 10-4 ; 615 ; 801) reçoit un faisceau de lumière incident par l'intermédiaire des filtres optiques, et transmet les faisceaux de lumière polarisés au dispositif de formation d'image (600 ; 703 ; 802 ; 902 ; 1002) de sorte que le dispositif de formation d'image forme des images en utilisant les faisceaux de lumière filtrés et polarisés.
